(19) **Europäisches Patentamt / European Patent Office / Office européen des brevets**

(11) **EP 4 696 436 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
**B22F 12/50** (2021.01)    **B22F 12/13** (2021.01)
**B22F 12/17** (2021.01)    **B22F 10/30** (2021.01)
**B22F 10/22** (2021.01)

(21) Application number: **24905121.0**

(22) Date of filing: **15.10.2024**

(86) International application number:
**PCT/KR2024/015631**

(87) International publication number:
**WO 2026/005143 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.06.2024 KR 20240082098**

(71) Applicant: **UniTech3DP Inc.**
**Daejeon 34051 (KR)**

(72) Inventors:
• **KIM, Sanglae**
  **Yuseong-gu, Daejeon 34139 (KR)**
• **ANDREU GONZALEZ, Alberto**
  **Yuseong-gu, Daejeon 34141 (KR)**

(74) Representative: **Lavoix**
**Bayerstraße 83**
**80335 München (DE)**

(54) **MULTI-PHASE 3D PRINTING APPARATUS FOR IMPLEMENTING PRECISE CONTROL OF FLOW FOR FORMING SCULPTURE**

(57) In the present disclosure, a multi-phase three-dimensional (3D) printing apparatus is provided. According to the present disclosure, flow of a first material may be controlled in a precise manner by a two-way pressure control unit capable of controlling pressure in two ways to be a positive pressure for accelerating the flow of the first material forming a shaped object or a negative pressure for decelerating or applying a brake to the fluid flow of the first material, and for example, a control member capable of controlling the flow of the first material in real time in a shaping process may be provided to meet without any excess or shortage an application volume per unit hour which is set from a width of a scan line forming a transfer path of a first discharge unit for discharging the flow of the first material and a length of the scan line per unit hour, which corresponds to a transfer velocity of the first discharge unit.

FIG. 1

EP 4 696 436 A1

## Description

## Technical Field

The present disclosure relates to a multi-phase three-dimensional (3D) printing apparatus.

## Background Art

Three-dimensional (3D) printing apparatuses are apparatuses used to form a shaped object having a particular shape, and may, for example, manufacture a shaped object by stacking layers of the shaped object on the basis of an input of sliced section data of the shaped object to be formed. For example, in such 3D printing apparatuses, a 3D object may be manufactured by generating a 3D shape of a shaped object to be modeled as digital data through a computer modeling process, slicing the data into two-dimensional layers, and then repeatedly stacking materials based on the sliced data.

## Disclosure of Invention

## Technical Problem

According to an embodiment of the present disclosure, a fluid flow of a first material may be controlled in a sophisticated manner by a two-way pressure control unit capable of controlling a pressure in two ways to be a positive pressure for accelerating the fluid flow of the first material forming an object or a negative pressure for decelerating or applying a brake to the fluid flow of the first material, and a multi-phase three-dimensional (3D) printing apparatus including a two-way pressure control unit capable of controlling the fluid flow of the first material in real time in an object-forming process may be provided to meet without any excess or shortage an application volume per unit hour which is set from a width of a scan line forming a transfer path of a first discharge unit for discharging the fluid flow of the first material and a length of the scan line per unit hour, which corresponds to a transfer velocity of the first discharge unit.

## Solution to Problem

To solve the foregoing technical problem and other technical issues, a multi-phase three-dimensional (3D) printing apparatus includes:

a first discharge nozzle for discharging a first material which is a liquid forming an object on a stage;
a heating funnel connected to the first discharge nozzle and filled up with the first material which is a liquid; and
a two-way pressure control unit connected to the heating funnel, alternately reversing between a positive pressure and a negative pressure a pressure difference between an inside and an outside of the heating funnel, and configured to i) accelerate a fluid flow of the first material towards the first discharge nozzle from the heating funnel according to a positive pressure and ii) decelerate the fluid flow of the first material towards the first discharge nozzle from the heating funnel or apply a brake to the fluid flow of the first material according to a negative pressure.

## Advantageous Effects of Invention

According to the present disclosure, a fluid flow of a first material may be controlled in a sophisticated manner by a two-way pressure control unit capable of controlling a pressure in two ways to be a positive pressure for accelerating the fluid flow of the first material forming an object or a negative pressure for decelerating or applying a brake to the fluid flow of the first material, and for example, a multi-phase three-dimensional (3D) printing apparatus including a two-way pressure control unit capable of controlling the fluid flow of the first material in real time in an object-forming process may be provided to meet without any excess or shortage an application volume per unit hour which is set from a width of a scan line forming a transfer path of a first discharge unit for discharging the fluid flow of the first material and a length of the scan line per unit hour, which corresponds to a transfer velocity of the first discharge unit.

## Brief Description of Drawings

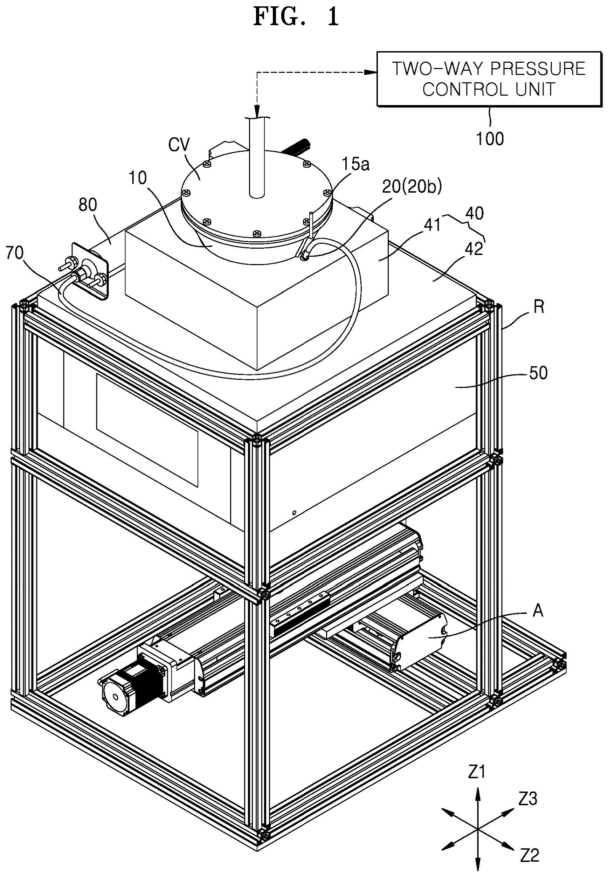

FIG. 1 is an overall perspective view of a multi-phase three-dimensional (3D) printing apparatus according to an embodiment of the present disclosure.

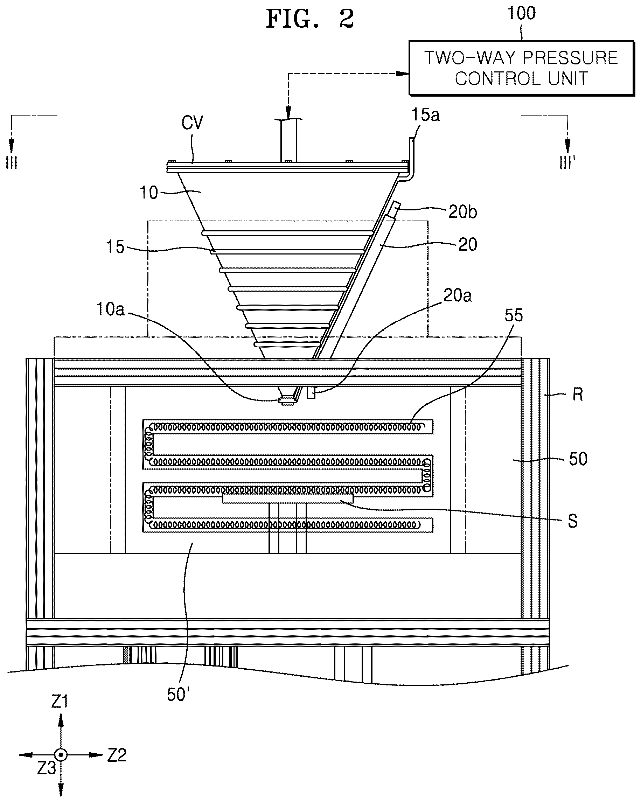

FIG. 2 is a plan view illustrating some parts of the multi-phase 3D printing apparatus illustrated in FIG. 1.

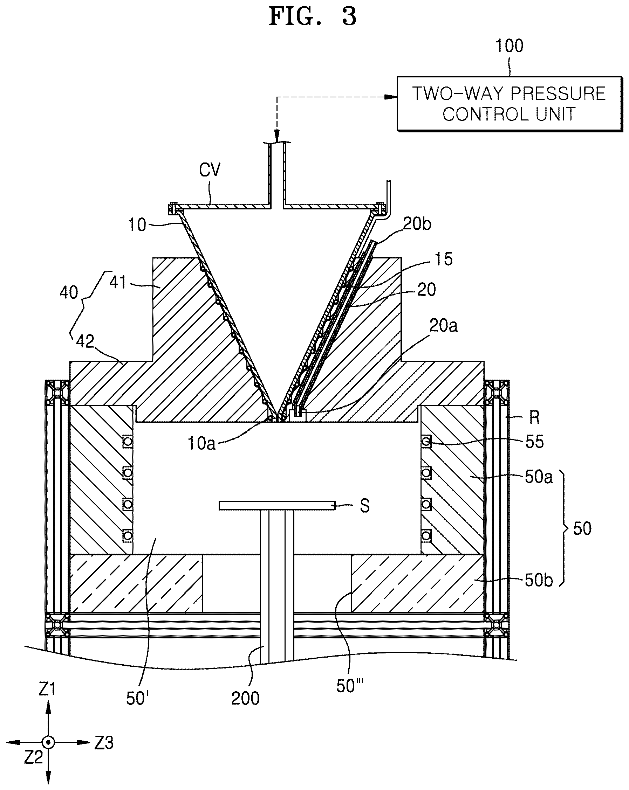

FIG. 3 is a cross-sectional view of the multi-phase 3D printing apparatus of FIG. 1 taken along line III-III' of FIG. 2.

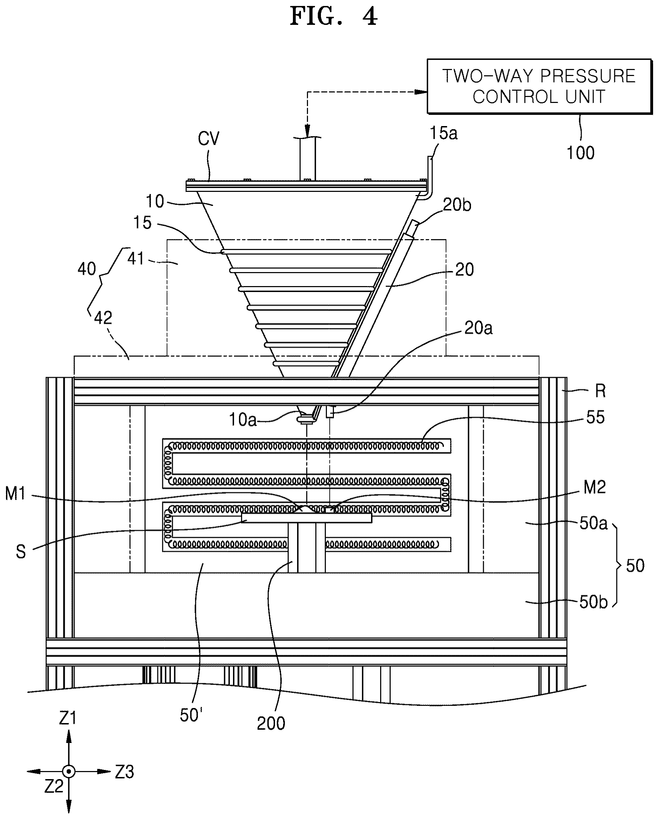

FIG. 4 is a diagram illustrating the forming of a shaped object in the multi-phase 3D printing apparatus illustrated in FIG. 1 by forming an outline of a shaped object and filling a filling space surrounded by the outline of the shaped object, which are formed from a first discharge position and a second discharge position on a stage S to which a first material M1 and a second material M2 that are different from each other.

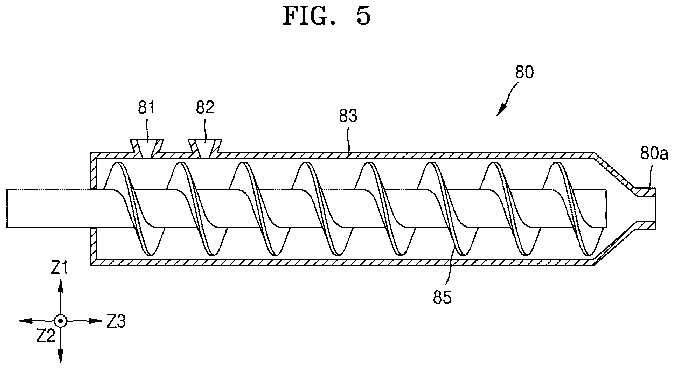

FIG. 5 is a diagram illustrating the extrusion apparatus 80 illustrated in FIG. 1, showing a schematic configuration of the extrusion apparatus 80 of FIG. 1.

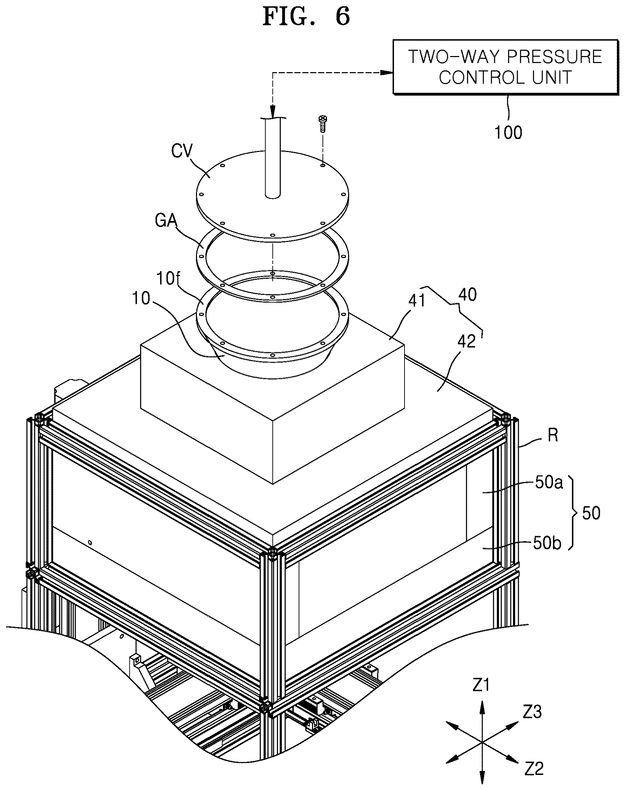

FIG. 6 is an exploded perspective view illustrating a sealing structure of a heating funnel 10 and a sealing cover CV which are combined with each other with a sealing gasket GA interposed therebetween, as part of the multi-phase 3D printing apparatus illustrated in FIG. 1.

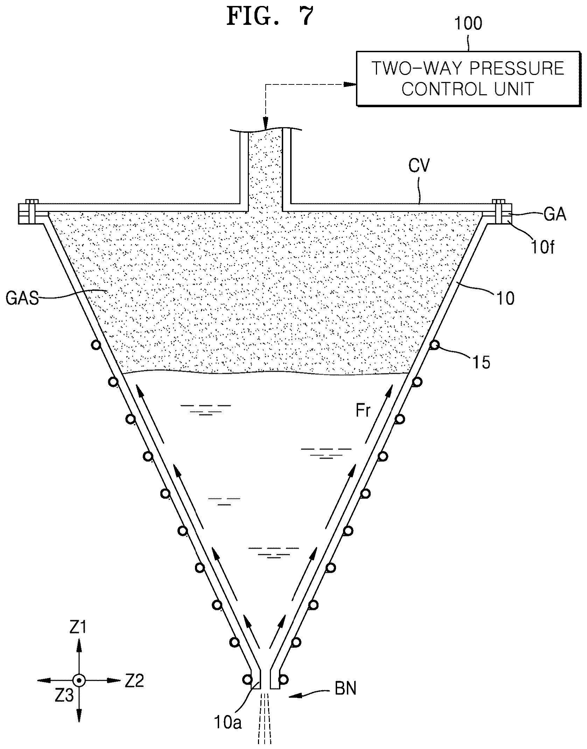

FIG. 7 is a diagram illustrating fluid resistance causing pressure loss in the flow of a first material M1 in liquid phase towards a first discharge nozzle 10a from the heating funnel 10, as part of the multi-phase 3D printing apparatus illustrated in FIG. 1.

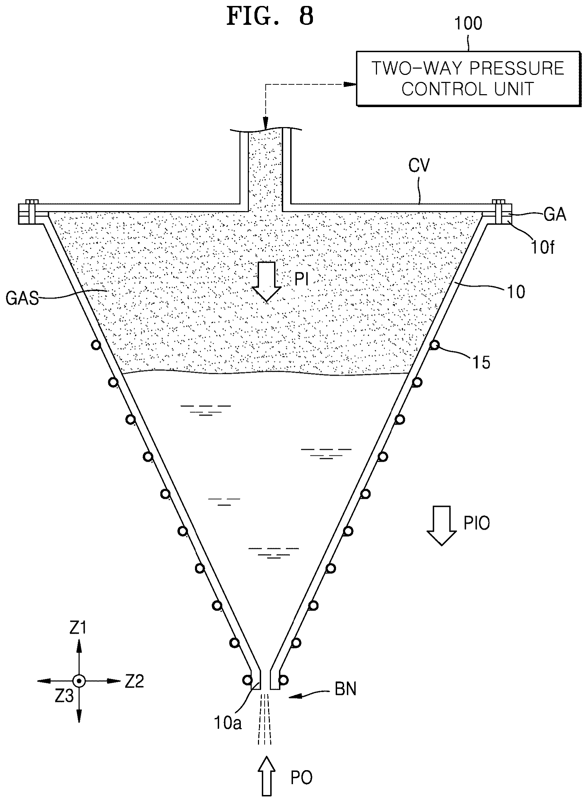

FIG. 8 is a diagram illustrating a pressure difference PIO between the inside and the outside of the heating funnel 10, which is set as positive pressure to accelerate a fluid flow of the first material M1 in liquid phase flowing towards the first discharge nozzle 10a from the heating funnel 10, as a part of the multi-phase 3D printing apparatus illustrated in FIG. 1.

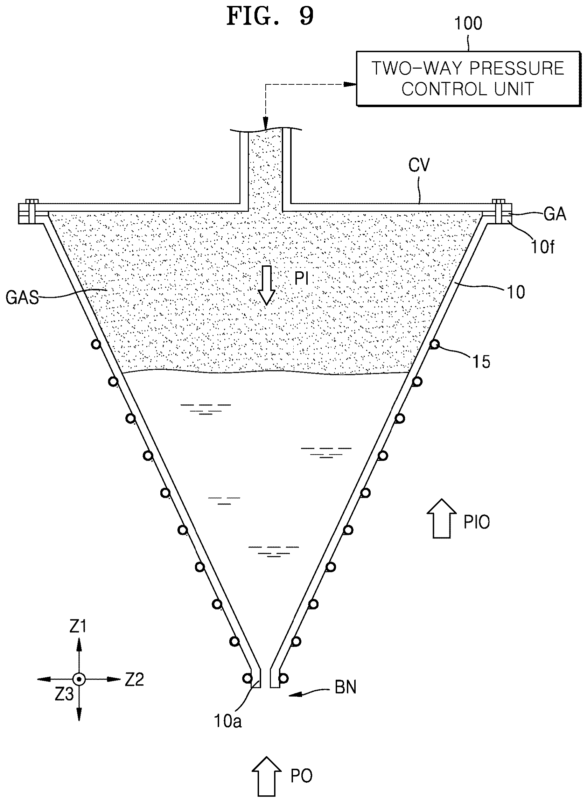

FIG. 9 is a diagram illustrating a pressure difference PIO between the inside and the outside of the heating funnel 10, which is set as a negative pressure to decelerate or apply a brake to the fluid flow of the first material M1 in liquid phase towards the first discharge nozzle 10a from the heating funnel 10, as part of the multi-phase 3D printing apparatus illustrated in FIG. 1.

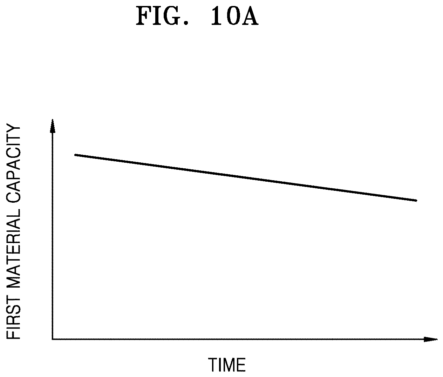

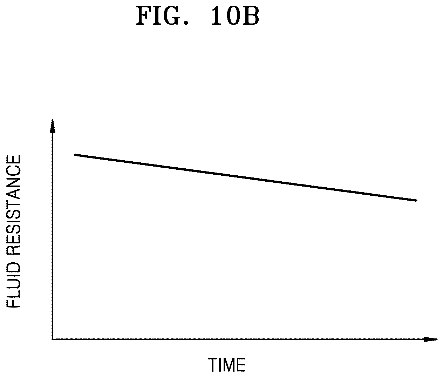

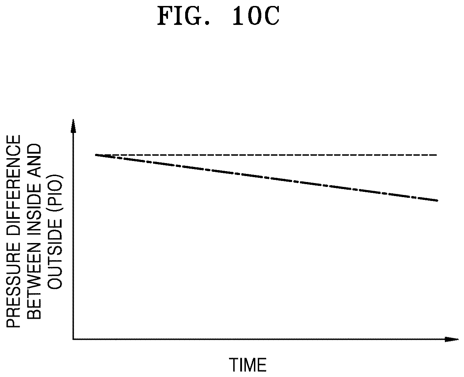

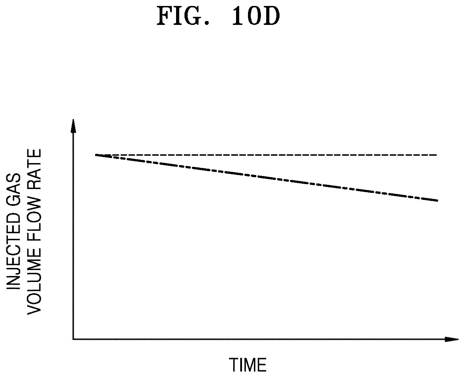

FIGS. 10 A to 10D are diagrams each showing a different profile, which schematically illustrate longitudinal changes in an amount of the first material M1 received in the heating funnel 10, fluid resistance causing pressure loss in flow of the first material M1 in liquid phase towards the first discharge nozzle 10a from the heating funnel 10, a pressure difference PIO between the inside and the outside of the heating funnel 10, which is set to maintain the flow of the first material M1 in liquid phase discharged from the first discharge nozzle 10a in a steady-state, and a volume of a gas GAS injected to maintain the fluid flow of the first material M1 in liquid phase discharged from the first discharge nozzle 10a in the steady state, along a time axis.

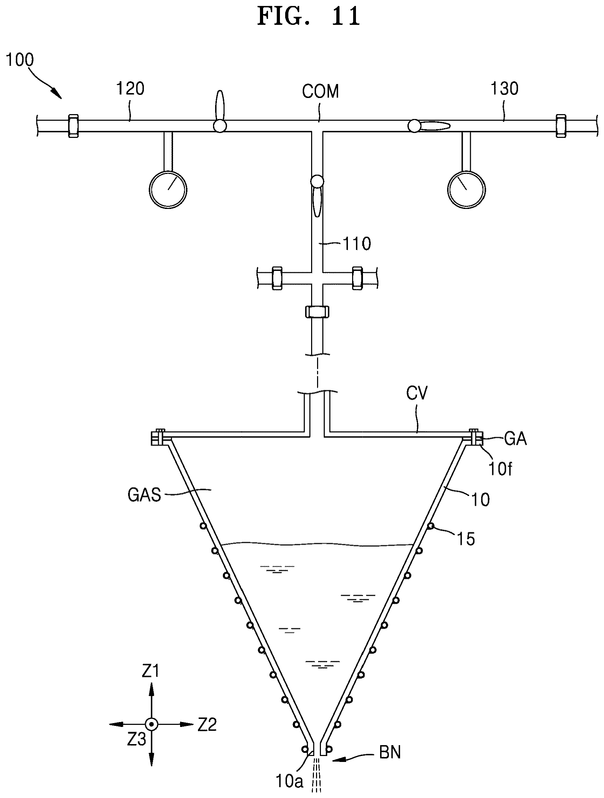

FIG. 11 is a diagram illustrating an embodiment of the two-way pressure control unit 100 of FIG. 1 and schematically shows a configuration of the two-way pressure control unit 100 controlling injection and discharge of the gas GAS into and from the heating funnel 10 to set a pressure difference PIO between the inside and the outside of the heating funnel 10 in two ways, i.e., as a positive pressure and a negative pressure.

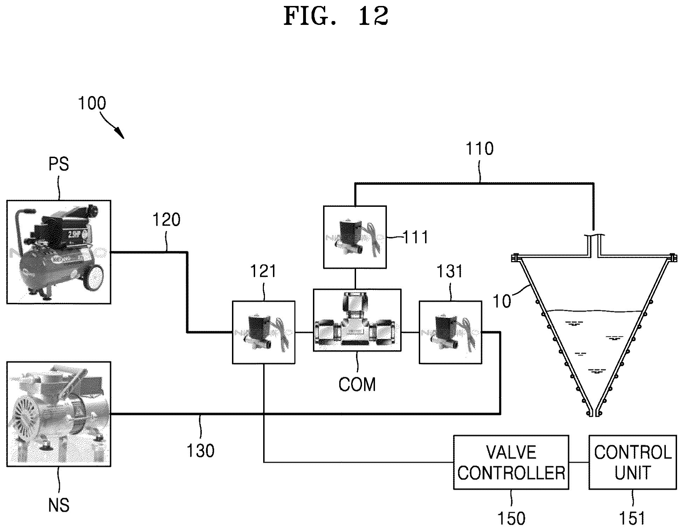

FIG. 12 is a diagram illustrating another embodiment of the two-way pressure control unit 100 of FIG. 1 and schematically shows the two-way pressure control unit 100 controlling injection and discharge of the gas GAS into and from the heating funnel 10 to set a pressure difference PIO between the inside and the outside of the heating funnel 10 in two ways, i.e., as a positive pressure and a negative pressure.

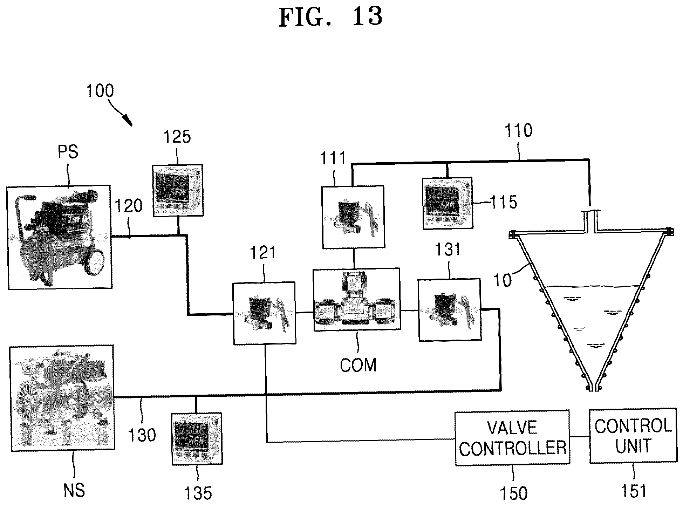

FIG. 13 is a diagram illustrating another embodiment of the two-way pressure control unit 100 of FIG. 1 and schematically shows the two-way pressure control unit 100 controlling injection and discharge of the gas GAS into and from the heating funnel 10 to set a pressure difference PIO between the inside and the outside of the heating funnel 10 in two ways, i.e., as a positive pressure and a negative pressure.

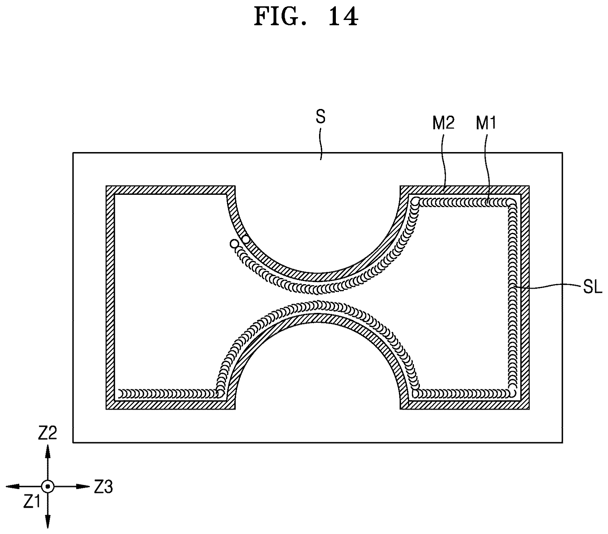

FIG. 14 is a diagram illustrating a width w of a scan line SL according to a transfer path which the first material M1 follows, the scan line SL being set to entirely scan an area of a shaped object surrounded by an outline of the shaped object formed by the second material M2.

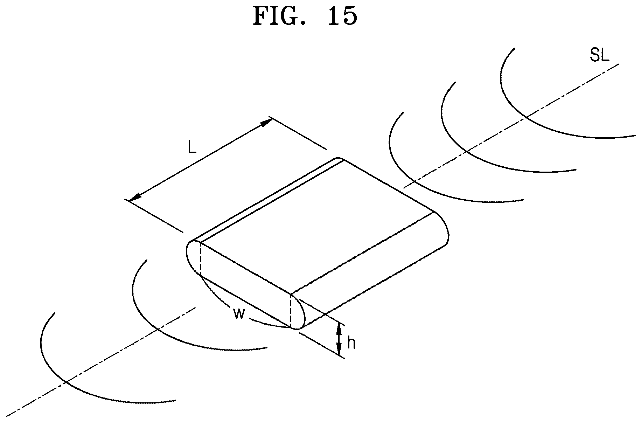

FIG. 15 is a diagram illustrating calculation of a cross-sectional area of the scan line SL including a width w dimension of the scan line SL along the transfer path of FIG. 14 and an application volume V per unit hour according to a length L of the scan line SL per unit hour, which is set according to a transfer velocity.

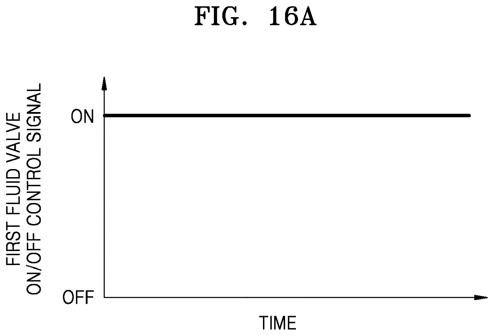

FIGS. 16A to 16C are diagrams illustrating an ON-/OFF control signal of first to third fluid valves 111, 121, and 131 output from the valve controller 150 according to time flow.

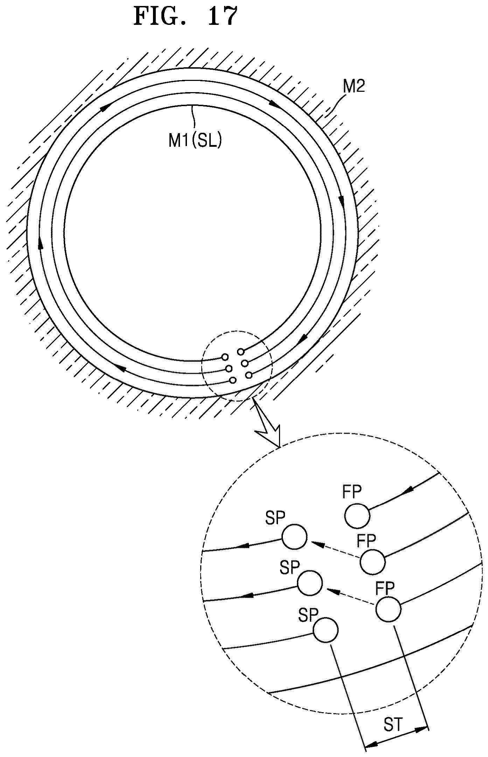

FIG. 17 is a diagram illustrating an application stop section ST between a finish point FP of the scan line SL of a previous turn and a start point SP of the scan line SL of a subsequent turn in a molding process for forming a shaped object from accumulation of the previous turn and the subsequent turn, along the transfer path of the first discharge nozzle from which the first material is discharged.

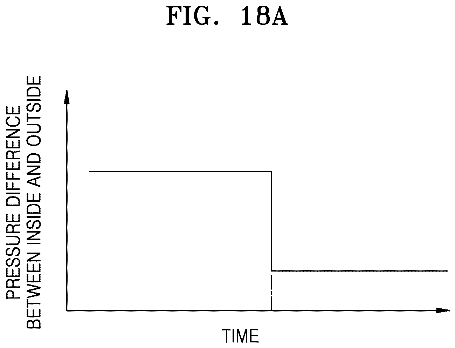

FIGS. 18A to 18C are diagrams respectively illustrating a stepped profile in relation to the pressure difference between the inside and the outside of the heating funnel, a control signal for controlling an opening degree of a second fluid valve, which is output to follow a stepped pressure difference between the inside and the outside of the heating funnel, and a profile of an on/off control signal of a third fluid valve.

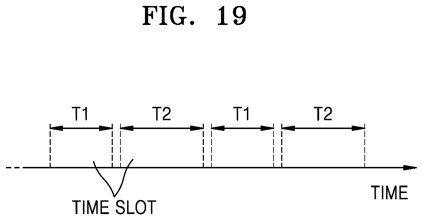

FIG. 19 is a diagram illustrating operating sections T1 and T2 of first and second discharge nozzles 10a and 20a, which are divided by exclusive time slots in a formation process for forming a shaped object.

**Best Mode for Carrying out the Invention**

To solve the foregoing technical problem and other technical issues, a multi-phase three-dimensional (3D) printing apparatus includes:

a first discharge nozzle for discharging a first material which is a liquid forming an object on a stage;
a heating funnel connected to the first discharge nozzle and filled up with the first material which is a liquid; and
a two-way pressure control unit connected to the heating funnel, alternately reversing between a positive pressure and a negative pressure a pressure difference between an inside and an outside of the heating funnel, and configured to i) accelerate a fluid flow of the first material towards the first discharge nozzle from the heating funnel according to a positive pressure and ii) decelerate the fluid flow of the first material towards the first discharge nozzle from the heating funnel or apply a brake to the fluid flow of the first material according to a negative pressure.

For example, the two-way pressure control unit may be further configured to set the pressure difference between the inside and the outside of the heating funnel as a negative pressure and apply a brake to the fluid flow of the first material towards the first discharge nozzle from the heating funnel.

For example, the two-way pressure control unit may be further configured to set the pressure difference between the inside and the outside of the heating funnel as a negative pressure or a pulse of a negative pressure including application and cut-off of a negative pressure to provide suction force towards the heating funnel such that the fluid flow of the first material is not discharged towards the first discharge nozzle from the heating funnel.

For example, the two-way pressure control unit may be further configured to
set the pressure difference between the inside and the outside of the heating funnel as a negative pressure or a pulse of a negative pressure including application and cut-off of a negative pressure at a finish point of a transfer path of the first discharge nozzle or a finish point of a scan line forming the transfer path of the first discharge nozzle.

For example, the two-way pressure control unit may be further configured to
set along a transfer path of the first discharge nozzle or a scan line forming the transfer path of the first discharge nozzle the pressure difference between the inside and the outside of the heating funnel as a negative pressure or a pulse of a negative pressure including application and cut-off of a negative pressure at a finish point of the scan line and a start point of the scan line.

For example, when shaping the object according to accumulation of a previous turn and a subsequent turn and lamination of a previous layer and a subsequent layer,
along the transfer path of the first discharge nozzle, a finish point and a start point of a scan line forming the transfer path of the first discharge nozzle may be positioned between the previous turn and the subsequent turn and between the previous layer and the subsequent layer.

For example, along the transfer path of the first discharge nozzle,

an application stop section may be formed between a finish point of the scan line in the previous turn and a start point of the scan line in the subsequent turn and
between a finish point of the scan line in the previous layer and a start point of the scan line in the subsequent layer, and
the two-way pressure control unit may be further configured to set the pressure difference between the inside and the outside of the heating funnel as a negative pressure or a pulse of a negative pressure including application and cut-off of a negative pressure at the application stop section.

For example, the multi-phase 3D printing apparatus may further include

a second discharge nozzle for discharging a second material to form an outline of the object,
wherein the two-way pressure control unit may be further configured to set the pressure difference between the inside and the outside of the heating funnel as a negative pressure or a pulse of a negative pressure including application and cut-off of a negative pressure to shut off discharge of the first material when the second material is being discharged.

For example, an operation section of the first discharge nozzle in which the first discharge nozzle and the second discharge nozzle combined with each other are transferred together along the transfer path of the first discharge nozzle and

an operation section of the second discharge nozzle in which the first discharge nozzle and the second discharge nozzle combined with each other are transferred together along the transfer path of the second discharge nozzle
may be distinguished from each other by respective exclusive time slots in a shaping process for forming an object.

For example, the two-way pressure control unit may include:

a first fluid tube connected to the heating funnel and a first fluid valve for regulating connection of the first fluid tube;
a second fluid tube connected to a positive pressure source and a second fluid valve for regulating connection of the second fluid tube;
a third fluid tube connected to a negative pressure source and a third fluid valve for regulating connection of the third fluid tube; and
a valve controller configured to control the first to third fluid valves, and
the valve controller may implement a control over on/off of the second fluid valve and a control over on/off of the third fluid valve.

For example, the valve controller may be configured to
control the on/off of the second fluid valve and the on/off of the third fluid valve such that the on/off of the second fluid valve and the on/off of the third fluid valve are alternated to include partial overlaps or not to include any overlap according to a time axis.

For example, the valve controller may be further configured to implement the on/off and an opening degree of the second fluid valve and the on/off and an opening degree of the third fluid valve.

For example, the valve controller may be configured to

implement, along with a control for reducing the opening degree of the second fluid valve, a sequential control of the on/off of the third fluid valve.

For example, the valve controller may be configured to

output a control signal of a tilted ramp waveform which has a first rising time or a first falling time for a control to reduce the opening degree of the second fluid valve and

output a control signal of a pulse wave form which has a second rising time shorter than the first rising time or a second falling time shorter than the second falling time for a sequential control of the on/off of the third fluid valve.

For example, the two-way pressure control unit may be further configured to

accelerate the fluid flow of the first material towards the first discharge nozzle from the heating funnel by setting the pressure difference between the inside and the outside of the heating funnel as a positive pressure in response to a shortage of an application volume per unit hour of the first material, wherein the application volume per unit hour is set according to the transfer path and a transfer velocity of the first discharge nozzle or

reduce the fluid flow of the first material towards the first discharge nozzle from the heating funnel or apply a brake to the fluid flow of the first material by setting the pressure difference between the inside and the outside of the heating funnel as a negative pressure in response to an excess of an application volume per unit hour of the second material, wherein the application volume per unit hour is set according to the transfer path and the transfer velocity of the first discharge nozzle.

For example, the fluid flow of the first material towards the first discharge nozzle from the heating funnel may be accelerated, reduced, or limited by setting the pressure difference between the inside and the outside of the heating funnel as a positive pressure or a negative pressure according to an application volume per unit hour of the first material, wherein the application volume per unit hour is set according to the transfer path and the transfer velocity of the first discharge nozzle, and

the application volume per unit hour of the first material may be calculated my multiplying a length of a scan line per unit hour, which corresponds to the transfer velocity by a width of the scan line forming the transfer path or a cross-sectional area including a width dimension and a height dimension of the scan line.

For example, the heating funnel may include a circumferential surface having a top-wide bottom-narrow shape in which an internal diameter thereof is gradually reduced from a top inlet into which a metal block of the first material is input towards a bottleneck connected to the first discharge nozzle which is placed at a bottom of the heating funnel and discharges the first material in liquid phase, and

with respect to the fluid flow of the first material in liquid phase, fluid friction applied from the circumferential surface of the heating funnel and the bottleneck limiting a flow rate of the first material may cause a pressure loss to the fluid flow of the first material.

For example, the pressure loss caused to the fluid flow of the first material proceeding from the inside of the heating funnel to the outside of the heating funnel may be reduced as the first material filled in the heating funnel having a limited capacity is discharged from the inside of the heating funnel onto the stage outside the heating funnel.

For example, the two-way pressure control unit may be further configured to

in a steady-state where an amount of the first material discharged from the inside of the heating funnel onto the stage outside the heating funnel remains constant,

i) to reduce the pressure difference between the inside and the outside of the heating funnel to offset a pressure loss which decreases as the first material is discharged or

ii) maintain the pressure difference between the inside and the outside of the heating funnel constant as a reduced self-weight and a reduced pressure loss which act in opposite tendencies from each other with respect to the fluid flow of the first material are offset against each other in accordance with a discharge of the first material.

The pressure difference between the inside and the outside of the heating funnel may be controlled.

For example, the multi-phase 3D printing apparatus may further include:

a sealing cover covering and sealing a top inlet of the heating funnel and combined to face the heating funnel; and

a sealing gasket arranged between the heating funnel and the sealing cover and sealing a gap between the heating funnel and the sealing cover.

For example, the heating funnel may include a sealing flange formed along an outer circumferential edge of the top inlet, and

the sealing gasket may be arranged between the sealing cover and sealing flange of the heating funnel which are combined facing each other by a fastening member passing through the sealing cover having a plate shape and the sealing flange of the heating funnel which are formed in parallel with each other.

For example, the two-way pressure control unit may include:

a first fluid tube extending towards the heating funnel from a common joining point;
a second fluid tube connected to a positive pressure source from the common joining point; and
a third fluid tube connected to a negative pressure source from the common joining point.

For example, the two-way pressure control unit may include:

a first fluid valve arranged on the first fluid tube and connected between the common joining point and the heating funnel;
a first pressure gauge arranged on the first fluid tube and connected between the heating funnel and the first fluid valve;
a second fluid valve arranged on the second fluid tube and connected between the common joining point and a positive pressure source;
a second pressure gauge arranged on the second fluid tube and connected between the positive pressure source and the second fluid valve;
a third fluid valve arranged on the third fluid tube and connected between the common joining point and a negative pressure source; and
a third pressure gauge arranged on the third fluid tube and connected between the negative pressure source and the third fluid valve.

For example, the two-way control unit may further include
a valve controller connected to each of the first to third fluid valves and configured to apply a control signal for controlling opening/closing and an opening degree of each of the first to third fluid values.

For example, the valve controller may be configured to

control and open the first and second fluid valves to set the pressure difference between the inside and the outside of the heating funnel as a positive pressure and
control and open the first and third fluid valves to set the pressure difference between the inside and the outside of the heating funnel as a negative pressure.

For example, the multi-phase 3D printing apparatus may further include

a second discharge nozzle for discharging the second material in a paste phase or a slurry phase forming an outline of the object,
wherein a width of the scan line forming the transfer path of the first discharge nozzle may be set to entirely scan an object-forming area in which the object is formed, the object-forming area corresponding to a filler space surrounded by the outline of the object formed from the second material.

For example, the multi-phase 3D printing apparatus may further include
an extrusion apparatus connected to the second discharge nozzle and extruding the second material towards the second discharge nozzle to discharge the second material in a slurry phase or a paste phase including ceramic particles and a matrix into which the ceramic particles are dispersed.

For example, the multi-phase 3D printing apparatus may further include

a heating chamber accommodating the stage and providing a slow-cooling space for the first and second materials accumulated on the stage from the first and second discharge nozzles,
wherein the pressure difference between the inside and the outside of the heating funnel may correspond to an inside pressure of the heating funnel in which the first material in liquid phase is accommodated, based on an atmospheric pressure of the slow-cooling space of the heating chamber.

**Mode for the Invention**

Hereinafter, referring to the attached drawings, a multi-phase three-dimensional (3D) printing apparatus is described in relation to embodiments of the present disclosure.

A multi-phase 3D printing apparatus according to an embodiment of the present disclosure includes:

a first discharge nozzle 10a for discharging a first material M1 which is a liquid forming an object on a stage S;
a heating funnel 10 connected to the first discharge nozzle 10a and filled up with the first material M1 which is a liquid; and
a two-way pressure control unit 100 connected to the heating funnel 10, alternately reversing between a positive pressure and a negative pressure a pressure difference PIO between an inside and an outside of the heating funnel 10, and configured to i) accelerate a fluid flow of the first material M1 towards the first discharge nozzle 10a from the heating funnel 10 according to a positive pressure and ii) decelerate the fluid flow of the first material M1 towards the first discharge nozzle 10a from the heating funnel 10 or apply a brake to the fluid flow of the first material M1 according to a negative pressure.

In an embodiment of the present disclosure, the two-way pressure control unit 100 may set the pressure difference PIO between the inside and the outside of the heating funnel 10 as a negative pressure to apply a brake to the fluid flow of the first material M1 towards the first discharge nozzle 10a from the heating funnel 10.

In an embodiment of the present disclosure, the two-way pressure control unit 100 may set the pressure difference PIO between the inside and the outside of the heating funnel 10 as a negative pressure or a pulse of a negative pressure to provide suction force towards the heating funnel 10 such that the fluid flow of the first material M1 is not discharged towards the first discharge nozzle 10a from the heating funnel 10.

In an embodiment of the present disclosure, the heating funnel 10 may include

a circumferential surface having a top-wide bottom-narrow shape in which an internal diameter thereof is gradually reduced from a top inlet into which a metal block of the first material M1 is input towards a bottleneck BN connected to the first discharge nozzle 10a which is placed at a bottom of the heating funnel 10 and discharges the first material M1 in liquid phase, and

with respect to the fluid flow of the first material M1 in liquid phase, fluid friction applied from the circumferential surface of the heating funnel 10 and the bottleneck BN limiting a flow rate of the first material M1 may cause a pressure loss to the fluid flow of the first material M1.

In an embodiment of the present disclosure, the pressure loss caused to the fluid flow of the first material M1 proceeding from the inside of the heating funnel 10 to the outside of the heating funnel 10 may be reduced as the first material M1 filled in the heating funnel 10 having a limited capacity is discharged from the inside of the heating funnel 10 onto the stage S outside the heating funnel 10.

In an embodiment of the present disclosure, the two-way pressure control unit 100 may control the pressure difference PIO between the inside and the outside of the heating funnel 10 in a steady-state where an amount of the first material M1 discharged from the inside of the heating funnel 10 onto the stage S outside the heating funnel 10 remains constant,

i) to reduce the pressure difference PIO between the inside and the outside of the heating funnel 10 to offset a pressure loss which decreases as the first material M1 is discharged or

ii) maintain the pressure difference between the inside and the outside of the heating funnel constant as a reduced self-weight and a reduced pressure loss which act in opposite tendencies from each other with respect to the fluid flow of the first material are offset against each other in accordance with a discharge of the first material.

The pressure difference PIO between the inside and the outside of the heating funnel 10 may be controlled.

In an embodiment of the present disclosure, the two-way pressure control unit 100 may

set the pressure difference PIO between the inside and the outside of the heating funnel 10 as a positive pressure to offset the pressure loss caused to the fluid flow of the first material M1 towards the outside of the heating funnel 10 from the inside of the heating funnel 10,

wherein the pressure difference may be set as a decreasing positive pressure to offset the pressure loss which decreases as the first material M1 is discharged or may be set as a positive pressure of a certain level as a reduced self-weight and a reduced pressure loss which act in opposite tendencies from each other with respect to the fluid flow of the first material M1 are offset against each other in accordance with a discharge of the first material M1.

In an embodiment of the present disclosure, the two-way pressure control unit 100 may

set the pressure difference PIO between the inside and the outside of the heating funnel 10 as a positive pressure by injecting to the heating funnel 10 a gas GAS which is accumulated inside the heating funnel 10 and forms an inside pressure PI of the heating funnel 10 or

set the pressure difference PIO between the inside and the outside of the heating funnel 10 as a negative pressure by discharging from the heating funnel 10 the gas GAS which is accumulated inside the heating funnel 10 and forms the inside pressure PI of the heating funnel 10.

In an embodiment of the present disclosure, the two-way pressure control unit 100 may

To maintain a steady-state of a discharge amount of the first material M1 from the inside of the heating funnel 10 towards the stage S outside, a volume flow rate of the gas GAS filling a volume of the discharged first material M1 may be provided, and

i) the volume flow rate of the gas GAS may be controlled such that the volume flow rate of the gas GAS injected to the heating funnel 10, along with a decrease of the pressure difference PIO between the inside and the outside of the heating funnel 10 for offsetting the pressure loss according to a discharge of the first material M1 or

ii) the volume flow rate may be controlled such that the volume flow rate of the gas GAS injected into the heating funnel 10 remains constant to maintain the pressure difference between the inside and the outside of the heating funnel 10 constant as a reduced self-weight of the first material M1 and a reduced pressure loss which act in opposite tendencies from each other with respect to the fluid flow of the first material M1 are offset against each other in accordance with the discharge of the first material M1.

Hereinafter, an aspect of the multi-phase 3D printing apparatus according to an embodiment of the present disclosure is further described in detail.

In the multi-phase 3D printing apparatus according to an embodiment of the present disclosure, the first material M1 in liquid phase forming an object may be discharged onto the stage S from the heating funnel 10 according to the pressure difference PIO between the inside and the outside of the heating funnel 10, wherein, according to the pressure difference PIO between the inside and the outside of the heating funnel 10, a positive pressure difference may act as extrusion force which may forcibly discharge the second material M2 in liquid phase filled inside the heating funnel 10 to the outside of the heating funnel 10, and a negative pressure difference may act as suction force which may suck the first material M1 in liquid phase proceeding towards the outside of the heating funnel 10 into the inside of the heating funnel 10. As described below, in an embodiment of the disclosure, with respect to the first material M1 melted into liquid inside the heating funnel 10, as the bottleneck BN having a minimum internal diameter and connected to the first discharge nozzle 10a is formed according to the self-weight of the first material M1 from the inside of the heating funnel 10 having an internal diameter decreasing gradually, the fluid flow of the first material M1 may be limited, and a circumferential surface of the heating funnel 10 formed in a top-wide bottom-narrow shape may cause fluid friction to the fluid flow of the first material M1. The fluid resistance may be generated due to such bottleneck BN of the heating funnel 10, fluid friction caused on the circumferential surface of the heating funnel 10, etc., and proper extrusion force which may force the fluid flow of the first material M1 to maintain the fluid flow of the first material M1 towards the first discharge nozzle 10a from the heating funnel 10 may be provided against such fluid friction. For example, in an embodiment of the present disclosure, in relation to the first material M1 accommodated in the heating funnel 10, the pressure difference PIO between the inside and the outside of the heating funnel 10 in which the first material M1 is accommodated may be set as a positive pressure as extrusion force for the fluid flow of the first material M1 along with the self-weight of the first material M1 for the purpose of reducing tact-time of a shaping process.

In other words, in an embodiment of the present disclosure, for the purpose of reducing the tact-time for shaping an object, the fluid flow of the first material M1 towards the stage S from the heating funnel 10 or the discharge velocity of the first material M1 in liquid phase discharged from the first discharge nozzle 10a onto the stage S may be maintained at a proper level, and to maintain the fluid flow of the first material M1 or the discharge velocity of the first material M1 at a proper level which is at least higher than the fluid flow of the first material M1 toward the stage S from the heating funnel 10 and the discharge velocity of the first material M1 discharged from the first discharge nozzle 10a, according to the self-weight of the first material M1, the pressure difference PIO between the inside and the outside of the heating funnel 10 may be set as a positive pressure that may act as the extrusion force for the first material M1 towards the stage S from the heating funnel 10. For example, in an embodiment of the present disclosure, for the purpose of reducing the tact-time of the shaping process of the object, the fluid flow of the first material M1 towards the stage S from the heating funnel 10 or the discharge velocity of the first material M1 may be increased, and to correspond to the increased fluid flow of the first material M1 or the discharge velocity of the first material M1, the transfer velocity of the first discharge nozzle 10a from which the first material M1 is discharged may be increased as well. By increasing the transfer velocity of the first discharge nozzle 10a entirely scanning an area in which the object if formed (shaping area), i.e., by increasing an application volume V per unit hour of the first material M1 forming the object, the tact-time for shaping the object of the tact-time for filling the volume of a set object may be reduced.

In an embodiment of the present disclosure, the heating funnel 10 from which the first material M1 is discharged may have an internal diameter which decreases gradually from a top inlet into which a metal block that is a raw material of the first material M1 in liquid phase to a bottom bottleneck BN connected to the first discharge nozzle 10a, and such structure may form some sort of fluid resistance limiting a volume of the first material M1 melted inside the heating funnel 10 having a minimum internal diameter at the bottleneck BN connected to the first discharge nozzle 10a. In an embodiment of the present disclosure, to increase the volume of the first material M1 despite such fluid friction (for example, for the purpose of reducing the tact-time), instead of relying on the self-weight of the first material M1, the pressure difference PIO between the inside and the outside of the heating funnel 10 in which the first material M1 is accommodated may be controlled in two ways, i.e., a positive pressure and a negative pressure, in addition to the self-weight of the first material M1, such that the control parameters for the fluid flow of the first material M1 and the discharge velocity of the first material M1 are provided while increasing the fluid flow of the first material M1 and the discharge velocity of the first material M1.

Throughout the present specification, the pressure difference PIO between the inside and the outside of the heating funnel 10 may refer to a relative pressure accumulated inside the heating funnel 10 based on a pressure on the stage S forming the outside of the heating funnel 10, i.e., an outside pressure PO of the heating funnel 10 or an atmospheric pressure (1atm) in an atmospheric environment forming the outside (relative inside pressure PI of the heating funnel 10 based on the outside atmospheric pressure of the heating funnel 10). In this sense, the pressure difference PIO between the inside and the outside of the heating funnel 10 according to an embodiment of the present disclosure may correspond to the relative inside pressure PI of the heating funnel 10 based on the outside atmospheric pressure (1atm) of the heating funnel 10 and may act in relation to the first material M1 in liquid phase accommodated in the heating funnel 10 as the extrusion force accelerating the fluid flow towards the outside stage S from the inside of the heating funnel 10 or the suction force reducing or applying a brake to the fluid flow towards the outside stage S from the inside of the heating funnel 10.

In an embodiment of the present disclosure, the heating funnel 10 supplying the first material M1 in liquid phase towards the stage S through the first discharge nozzle 10a may have an internal diameter which gradually decreases from the top inlet into which a metal block in the solid phase is input as a raw material of the first material M1 in liquid phase to the bottom first discharge nozzle 10a to form the bottleneck BN having a minimum internal diameter, and the heating funnel 10 may be formed in a shape of a funnel including a circumferential surface having an internal diameter that decreases gradually.

In an embodiment of the present disclosure, the fluid flow of the first material M1 in liquid phase towards the stage S from the heating funnel 10 may be controlled according to the pressure difference PIO between the inside and the outside of the heating funnel 10 and may be controlled in consideration of the bottleneck BN of the heating funnel 10 which may act as the fluid resistance against the fluid flow towards the outside stage S from the inside of the heating funnel 10 and the pressure loss due to the fluid friction, etc. applied from the circumferential surface of the heating funnel 10 having an internal diameter decreasing gradually, for example, according to the pressure difference PIO between the inside and the outside of the heating funnel 10 from which such pressure loss is deducted. For example, the first material M1 in liquid phase melted inside the heating funnel 10 may form a fluid flow discharged toward the outside stage S from the heating funnel 10, and such fluid flow of the first material M1 may be accelerated or decelerated according to the pressure difference PIO between the inside and the outside of the heating funnel 10. The fluid flow of the first material M1 in an embodiment of the present disclosure may be limited according to the pressure difference PIO between the inside and the outside of the heating funnel 10.

In an embodiment of the present disclosure, the pressure difference PIO between the inside and the outside of the heating funnel 10 may be calculated by deducting the outside pressure PO (atmospheric pressure, 1atm) from the inside pressure PI of the heating funnel 10 based on the outside pressure PO (atmospheric pressure, 1atm) of the heating funnel 10, and the pressure difference PIO between the inside and the outside of the heating funnel 10 may be controlled in two-ways, i.e., positive pressure/negative pressure. More specifically, according to inside pressure PI of the heating funnel 10 fluidally connected to the two-way pressure control unit 100, the inside pressure PI of the heating funnel 10 may be formed higher than the outside pressure PO of the heating funnel 10, and the pressure difference PIO between the inside and the outside of the heating funnel 10, i.e., a positive pressure as the pressure difference PIO between the inside and the outside of the heating funnel 10 may accelerate the fluid flow to increase the fluid velocity of the fluid flow of the first material M1 in liquid phase accommodated in the heating funnel 10, or on the contrary, according to the inside pressure PI of the heating funnel 10 fluidally connected to the two-way pressure control unit 100, the inside pressure PI of the heating funnel 10 may be formed lower than the outside pressure PO of the heating funnel 10, and the pressure difference PIO between the inside and the outside of the heating funnel 10, i.e., a negative pressure as the pressure difference PIO between the inside and the outside of the heating funnel 10 may decelerate the fluid flow of the first material M1 to decrease the fluid velocity of the fluid flow of the first material M1 accommodated in the heating funnel 10 or apply a brake to the fluid flow of the first material M1 by forming the fluid velocity to be substantially zero or a negative value.

In an embodiment of the present disclosure, the inside pressure PI of the heating funnel 10 may be increased or decreased by the two-way pressure control unit 100 fluidally connected to the heating funnel 10, and accordingly, the inside pressure PI of the heating funnel 10 may be set as a positive pressure or a negative pressure based on the atmospheric pressure as the outside pressure PO of the heating funnel 10. In response to the control by the two-way pressure control unit 100, the inside pressure PI of the heating funnel 10 may be increased or decreased by controlling in real time injection or discharge of the gas GAS accumulated in the heating funnel 10 and forming the inside pressure PI of the heating funnel 10, and the acceleration or deceleration for increasing/decreasing the fluid velocity of the fluid flow of the first material M1 melted in the heating funnel 10 may be implemented by the inside pressure PI of the heating funnel 10 or the pressure difference PIO between the inside and the outside of the heating funnel 10 based on inside pressure PI of the heating funnel 10 or the outside pressure PO of the heating funnel 10 under a constant atmospheric pressure. For example, by injecting the gas GAS which is to be accumulated inside the heating funnel 10 to form the inside pressure PI into the heating funnel 10, a positive pressure may be formed between the inside and the outside of the heating funnel 10, and accordingly, the fluid velocity of the fluid flow of the first material M1 discharged from the inside of the heating funnel 10 to the outside of the heating funnel 10 may be accelerated. On the other hands, by discharging the gas GAS accumulated inside the heating funnel 10 and forming the inside pressure PI, a negative pressure difference may be formed between the inside and the outside of the heating funnel 10, and accordingly, the fluid velocity of the first material M1 discharged from the inside of the heating funnel 10 to the outside of the heating funnel 10 may be decelerated.

In an embodiment of the present disclosure, as the first material M1 filled in the heating funnel 10 having a limited capacity is discharged onto the stage S from the heating funnel 10, the amount of the first material M1 filled in the heating funnel 10 may decrease over time, and the injection of the gas GAS towards the heating funnel 10 may be conducted to fill an empty space which was previously occupied by the first material M1 in the heating funnel 10. Even when the injection of the gas GAS into the heating funnel 10 from the two-way pressure control unit 100 is performed, such injection of the gas GAS into the heating funnel 10 may form accumulation of the gas GAS inside the heating funnel 10 to the extent that the empty space generated after the discharge of the first material M1 inside of the heating funnel 10 is filled and may not cause an increase in the inside pressure PI due to the accumulation of the gas GAS or fluid acceleration to a metal fluid of the first material M1 due to an increased inside pressure PI of the heating funnel 10.

In an embodiment of the present disclosure, the pressure difference PIO between the inside and the outside of the heating funnel 10 may cause acceleration to the fluid flow of the first material M1 proceeding towards the stage S outside the heating funnel 10 from the inside of the heating funnel 10 (e.g., increase in fluid velocity), and the injection of the gas GAS towards the heating funnel 10 to accelerate the fluid flow may induce an increase in the inside pressure PI of the heating funnel 10 through the accumulation of the gas GAS inside the heating funnel 10. In an embodiment of the present disclosure, the inside pressure PI of the heating funnel 10 may be formed from accumulation of a material such as the first material M1 and the gas GAS accumulated inside the heating funnel 10. In an embodiment of the present disclosure, in an operational environment of the heating funnel 10 where a discharge of a material onto the outside stage S from the heating funnel 10, more specifically, a discharge of the first material M1 filled in the heating funnel 10 at a limited capacity is performed, supplementation of the material in an amount of the discharged first material M1 from the first material M1, i.e., accumulation of the material filling up the inside of the heating funnel 10 may not be performed to the extent that the gas GAS may be supplemented. Accordingly, for example, the injection of the gas GAS into the heating funnel 10 may not lead to an increase in the inside pressure PI of the heating funnel 10 caused by the accumulation of the material. More specifically, when the gas GAS is injected per unit hour into the heating funnel 10 in an amount of the first material M1 discharged per unit hour from the heating funnel 10, for example, the volume of the materials filling up the volume of the inside of the heating funnel 10, e.g., the volume of the gas GAS and the volume of the first material M1 may remain constant, and the inside pressure PI of the heating funnel 10 may not be increased despite the injection of the gas GAS. Accordingly, the fluid acceleration increasing the fluid velocity of the metal fluid of the first material M1 towards the stage S outside the heating funnel 10 from the inside of the heating funnel 10 may not be caused.

In an embodiment of the disclosure, as the first material M1 is discharged from the inside of the heating funnel 10 accommodating the first material M1 onto the stage S outside the heating funnel 10, the two-way pressure control unit 100 fluidally connected to the heating funnel 10 may supply to the heating funnel 10 the gas GAS having a volume that may fill up an empty space which was previously occupied by the first material M1 to fill up the empty space left in the amount of the discharge first material M1. For example, considering the discharge amount per hour of the first material M1 leaving the heating funnel 10, a volume flow rate of the gas GAS may be provided for supplying the gas GAS to fill up the volume of the discharged first material M1.

In an embodiment of the present disclosure, the heating funnel 10 in which the first material M1 is filled may include the bottleneck BN connected to the first discharge nozzle 10a discharging the first material M1 in liquid phase onto the stage S from the heating funnel 10 and may include a top-wide bottom-narrow circumferential surface having an internal diameter which decreases gradually from the top inlet into which a metal block in the solid phase including the first material M1 is input to the bottom first discharge nozzle 10a through which the first material M1 in liquid phase is discharged. The fluid flow of the first material M1 in liquid phase flowing along the top-wide bottom-narrow circumferential surface may experience the fluid friction from the top-wide bottom-narrow circumferential surface, and for example, a boundary layer where the first material M1 in liquid phase is stagnant may be formed on the top-wide bottom-narrow circumferential surface. The fluid flow of the first material M1 may experience a pressure loss according to the fluid friction which may be caused by the viscosity between the boundary layer and the fluid flow of the first material M1 flowing on the boundary layer or cohesion among the particles forming the first material M1, etc., and in addition to the pressure loss due to the fluid friction, the bottleneck BN which may substantially limit the discharge amount of the first material M1 towards the outside stage S from the inside of the heating funnel 10 may also cause a pressure loss. Thus, the pressure difference PIO between the inside and the outside of the heating funnel 10 may be set as a positive pressure to compensate for the pressure loss caused in the discharging process of the first material M1 towards the stage S from the inside of the heating funnel 10, and a pressure obtained by deducting the pressure loss from the pressure difference PIO between the inside and the outside of the heating funnel 10 set as a positive pressure may accelerate the fluid flow may to increase the fluid velocity of the first material M1. Considering the foregoing, the pressure difference PIO between the inside and the outside of the heating funnel 10 may be set as a positive pressure greater than the pressure loss to accelerate the fluid velocity of the fluid flow of the first material M1.

In an embodiment of the present disclosure, when the pressure difference PIO between the inside and the outside of the heating funnel 10 is set to be equal to the pressure loss, the metal fluid of the first material M1 filled in the heating funnel 10 may maintain a constant fluid velocity and may be discharged onto the stage S at a constant discharge velocity through the first discharge unit. In other words, when the pressure difference PIO between the inside and the outside of the heating funnel 10 is maintained to be equal to the pressure loss, the discharge amount of the first material M1 in liquid phase supplied from the inside of the heating funnel 10 towards the stage S may remain constant.

In an embodiment of the present disclosure, considering the operational environment of the heating funnel 10 in which the accommodated amount of the first material M1 in liquid phase is reduced gradually as the first material M1 in liquid phase is discharged from the heating funnel 10 onto the stage S through the first discharge nozzle 10a, the pressure loss (or fluid resistance) caused to the fluid flow of the first material M1 in liquid phase discharged onto the stage S from the heating funnel 10 may be reduced according to a time axis. More specifically, the pressure loss (or fluid resistance) caused to the fluid flow in the heating funnel 10 may include a component of fluid friction caused on the top-wide bottom-narrow circumferential surface of the heating funnel 10 having an internal diameter which decreases gradually, and a contact area forming a contact with the top-wide bottom-narrow circumferential surface of the heating funnel 10 may be gradually reduced according to the accommodated amount of the first material M1 filled in the heating funnel 10, which decreases as the first material M1 is discharged along the time axis. According to such reduction in the contact area between the first material M1 and the circumferential surface of the heating funnel 10, the fluid friction forming a correlation with the contact area of the heating funnel 10 may also be reduced, which leads to a reduced pressure loss (or fluid resistance). In an embodiment of the present disclosure, as the accommodated amount of the first material M1 filled inside the heating funnel 10 decreases according to the discharge of the first material M1 in liquid phase proceeding towards the stage S from the inside of the heating funnel 10 in which the first material M1 is filled, the contact area between the first material M1 and the circumferential surface of the heating funnel 10 in which the first material M1 is filled may be reduced as well, which results in a reduced pressure loss (fluid resistance).

In an embodiment of the present disclosure, in the operational environment in a steady-state where the amount of the first material M1 discharged from the inside of the heating funnel 10 onto the stage S remains constant, the discharge amount of the first material M1 in liquid phase or the fluid velocity of the first material M1 in liquid phase may remain constant, and to maintain the fluid velocity of the first material M1 in liquid phase constant, the pressure difference PIO between the inside and the outside of the heating funnel 10 forming a positive pressure to offset the pressure loss may be reduced in correspondence with the pressure loss (fluid resistance) decreasing along the time axis. In other words, as the pressure difference PIO between the inside and the outside of the heating funnel 10 refers to the relative inside pressure PI of the heating funnel 10 based on the outside pressure PO (atmospheric pressure, 1atm) of the heating funnel 10 which remains at a constant atmospheric pressure, the relative inside pressure PI of the heating funnel 10 based on the atmospheric pressure may be reduced along the time axis. In various embodiments of the present disclosure, as the amount of the first material M1 accommodated in the heating funnel 10 gradually decreases over time, the contact area between the first material M1 and the circumferential surface of the heating funnel 10 forming the fluid friction may be reduced, and in addition to the above, according to the self-weight of the first material M1 decreasing in accordance with the reduced amount of the first material M1 accommodated in the heating funnel 10, the reduced self-weight of the first material M1 which may facilitate the fluid flow of the first material M1 proceeding towards stage S outside the heating funnel 10 from the inside of the heating funnel 10 and the reduced fluid resistance of the first material M1 which may hinder the fluid flow of the first material M1 proceeding towards the stage S outside the heating funnel 10 from the inside of heating funnel 10 may be offset against each other. In this manner, the pressure difference PIO between the inside and the outside of the heating funnel 10 for forming the steady-state may remain constant.

In an embodiment of the present disclosure, the two-way pressure control unit 100 for supplying the gas GAS into the heating funnel 10 to offset the pressure loss caused to the fluid flow of the first material M1 proceeding towards the stage S from the inside of the heating funnel 10 may inject the gas GAS into the heating funnel 10 such that the pressure difference PIO between the inside and the outside of the heating funnel 10 is set as a positive pressure and may lower the flow rate per unit hour of the injected gas GAS, e.g., the volume flow rate of the injected gas GAS such that the inside pressure PI of the heating funnel 10 is reduced in correspondence with the pressure loss decreasing along the time axis for the purpose of offsetting the pressure loss. In various embodiments of the present disclosure, as the reduced self-weight of the first material M1 and the reduced resistance of the fluid flow of the first material M1 which act in opposite tendencies from each other with respect to the fluid flow of the first material M1 are offset against each other according to the reduction in the amount of the first material M1 accommodated in the heating funnel 10, the pressure difference PIO between the inside and the outside of the heating funnel 10 for maintaining the flow of the first material M1 in the steady state may remain at a constant level, and to this end, the two-way pressure control unit 100 connected to the heating funnel 10 may maintain the flow rate of the gas GAS towards the heating funnel 10, e.g., the volume flow rate of the injected gas GAS at a constant level.

In an embodiment of the present disclosure, in the operational environment in the steady state where the discharge amount of the first material M1 discharged onto the outside stage S from the inside of the heating funnel 10, the volume of the first material M1 injected per unit hour into the heating funnel 10 may remain constant, and for example, the two-way pressure control unit 100 fluidally connected to the heating funnel 10 may inject the gas GAS having a volume corresponding to the volume of the first material M1 discharged per unit hour from the heating funnel 10 into the heating funnel 10 to fill up an empty space having the volume of the first material M1 discharged per unit hour from the heating funnel 10. As a result, under such control by the two-way pressure control unit 100, the inside pressure PI of the heating funnel 10 in which the material of the same volume is accumulated may remain constant without a change in the volume of the material filling the heating funnel 10. As described above, as the first material M1 in liquid phase melted from a metal block input to the heating funnel 10 and filling the limited capacity of the heating funnel 10 is discharged onto the stage S outside the heating funnel 10 from the inside of the heating funnel 10, the inside pressure PI of the heating funnel 10 for offsetting the decreasing pressure loss (fluid resistance) may also be reduced in accordance with the pressure loss (fluid resistance) caused to the fluid flow of the first material M1 proceeding towards the outside of the heating funnel 10 from the inside of the heating funnel 10, and accordingly, in an embodiment of the present disclosure, the flow rate per unit hour of the gas GAS injected into the heating funnel 10, e.g., the volume flow rate corresponding to the volume per unit hour injected into the heating funnel 10 may be controlled to decrease according to the time axis.

In an embodiment of the present disclosure, in the operational environment in the steady state where a certain volume of the first material M1 is discharged per unit hour towards the outside of the heating funnel 10 from the inside of the heating funnel 10, the two-way pressure control unit 100 fluidally connected to the heating funnel 10 may inject a certain volume of the gas GAS per unit hour into the heating funnel 10 in correspondence with the volume of the first material M1 discharged per unit hour, and as the certain volume of the material is filled in the heating funnel 10, the inside pressure PI of the heating funnel 10 may remain constant. In an embodiment of the present disclosure, the inside pressure PI of the heating funnel 10 may be reduced according to the time axis in correspondence with the pressure loss decreasing along the time axis, and to this end, the flow rate of the gas GAS injected per unit hour into the heating funnel 10, e.g., the volume flow rate of the gas GAS, which corresponds to the volume of the gas GAS injected per unit hour into the heating funnel 10 may be reduced along the time axis.

In various embodiments of the present disclosure, as the reduced self-weight of the first material M1 and the reduced fluid resistance of the first material M1 which act in opposite tendencies from each other with respect to the fluid flow of the first material M1 according to the reduced amount of the first material M1 accommodated in the heating funnel 10 are offset against each other, the pressure difference PIO between the inside and the outside of the heating funnel 10 may remain constant to form the fluid flow of the first material M1 in the steady state, and the flow rate of the gas GAS supplied to the inside of the heating funnel 10, e.g., the volume of the gas GAS supplied per unit hour to the inside of the heating funnel 10 may also remain constant.

In an embodiment of the present disclosure, the two-way pressure control unit 100 connected to the heating funnel 10 and controlling the inside pressure PI of the heating funnel 10 may inject of discharge the gas GAS accumulated in the heating funnel 10 and forming the inside pressure PI to control the inside pressure PI of the heating funnel 10 or the pressure difference PIO between the inside and the outside of the heating funnel 10. In this regard, the gas GAS injected or discharged by the two-way pressure control unit 100 may be a compressible gas GAS or an incompressible gas GAS (Mach number of 0.3 or less). For example, in an embodiment of the present disclosure, as the gas GAS injected or discharged under the control by the two-way pressure control unit 100 may have a density that varies according to a pressure, and for example, in an embodiment of the present disclosure, the volume flow rate of the gas GAS injected into the heating funnel 10 in correspondence with the pressure loss (fluid resistance) of the inside pressure PI of the heating funnel 10 decreasing along the time axis may be reduced along the time axis. As such, when the volume flow rate of the gas GAS injected per unit hour decreases along the time axis, it may be assumed that an incompressible gas GAS of which density does not vary according to a change in the inside pressure PI of the heating funnel 10 is used while a volume of the gas GAS injected per unit hour remains constant along the time axis is used. In addition, in various embodiments of the present disclosure, as the reduced fluid resistance of the pressure loss and the reduced self-weight of the first material M1 which act in opposite tendencies from each other with respect to the fluid flow of the first material M1 in correspondence with the reduced amount of the first material M1 accommodated in the heating funnel 10 are offset against each other, a constant flow rate or volume of the incompressible gas GAS as the gas GAS injected or discharged under the control by the two-way pressure control unit 100 may be supplied to the heating funnel 10.

In various embodiments of the present disclosure, as the injection/discharge into/from the heating funnel 10 is controlled by the two-way pressure control unit 100, the gas GAS for controlling the inside pressure PI of the heating funnel 10 may include various compressible gases GAS and incompressible gases GAS and may include, for example, any fluid that encompasses a gaseous phase and a liquidous phase and is accumulated inside the heating funnel 10 to form the inside pressure PI of the heating funnel 10. For example, a gas-liquid mixture fluid including a matrix gas in gaseous phase including a liquid component such as vapor may be used.

In various embodiments of the present disclosure, the gas injected or discharged into or from the heating funnel 10 under the control by the two-way pressure control unit 100 connected to the heating funnel 10 to control the inside pressure PI of the heating funnel 10 may include a compressible gas GAS of which density of volume varies according to a given pressure, and in an embodiment of the present disclosure, in the operational environment in the steady state where the discharge amount of the first material M1 in liquid phase remains constant, the inside pressure PI of the heating funnel 10 under the control by the two-way pressure control unit 100 may be reduced or maintained at a certain level in accordance with the reduction in the pressure loss such as the fluid friction caused from the top-wide bottom-narrow circumferential surface of the heating funnel 10 according to the discharge of the first material M1. In this regard, given the density increase and volume compression of the compressible gas GAS according to the pressure of the heating funnel 10 and characteristic changes in the density or volume of the compressible gas GAS, the flow rate of the gas GAS injected into the heating funnel 10 to reduce or maintain the inside pressure PI of the heating funnel 10, for example, the volume flow rate of the gas GAS which corresponds to the volume of gas GAS injected per unit hour into the heating funnel 10 may show a reduction ratio having a relatively gentler slope than the incompressible gas GAS. The operations of the two-way pressure control unit 100 connected to the heating funnel 10 may be controlled to follow a profile in which the volume flow rate of the gas GAS increases according to the time axis in consideration of the characteristic density change or volume change of the compressible gas GAS filled up the empty space left according to the discharge of the first material M1.

In summary, the pressure according to the fluid friction or the fluid resistance caused to the fluid flow of the first material M1 in liquid phase discharged onto the stage S from the inside of the heating funnel 10 may gradually decrease along the time axis as the contact area between the first material M1 and the top-wide bottom-narrow circumferential surface of the heating funnel 10 in which the first material M1 is filled is reduced in the heating funnel 10 in which the first material M1 is filled in a limited amount. In this regard, in the operational environment in the steady state where the discharge amount of the stage S towards the stage S from the inside of the inside pressure PI remains constant, to offset the pressure loss decreasing along the time axis and maintain a constant fluid velocity of the first material M1, the inside pressure PI of the heating funnel 10 may be reduced along the time axis or may be maintained at a certain level in consideration of the offset between the self-weight of the first material M1 and the fluid resistance or the pressure loss which decreases in correspondence with the accommodated amount of the first material M1 decreasing over time.

In various embodiments of the present disclosure, to implement the operational environment in the steady state, i.e., to follow the profile of the inside pressure PI of the heating funnel 10 which is reduced or maintained along the time axis, the operations of the two-way pressure control unit 100 fluidally connected to the heating funnel 10 may be controlled. More specifically, the two-way pressure control unit 100 may control the flow rate of the gas GAS injected into the heating funnel 10 to control the inside pressure PI of the heating funnel 10, and the two-way pressure control unit 100 may increase or decrease according to the compressibility of the gas GAS injected into the heating funnel 10 the volume flow rate of the gas GAS which corresponds to the volume of the gas GAS injected per unit hour into the heating funnel 10 according to the time axis. For example, in an embodiment of the present disclosure, when the gas GAS or the fluid injected into the heating funnel 10 is a compressible gas GAS, the relative ratio of the material filling up an empty space inside the heating funnel 10 after the second material M2 is discharged per unit hour from the inside of the heating funnel 10 in the operational environment in the steady state may be changed from the compressible material of low ratio (compressible gas GAS) and the incompressible material (second material M2) of relatively high ratio to the compressible material (compressible gas GAS) of high ratio and an incompressible material (second material M2) of relatively low ratio. The flow rate of the gas GAS in an uncompressed or less compressed state, for example, the volume flow rate of the compressible gas GAS corresponding to the volume per unit hour may increase such that the pressure of the gas GAS compressed at the same level as the interface of the second material M2 from a compressible material (compressible gas GAS) having a ratio that increases gradually along the time axis. Only, as the volume flow rate of the compressible gas GAS injected into the heating funnel 10 may be measured in a substantially compressed state according to the inside pressure PI of the heating funnel 10 at certain nozzles where the measurement of the volume flow rate is conducted, for example, at certain nozzles to which the inside pressure PI of the heating funnel 10 may be delivered, in general, it may be understood that the volume flow rate of the compressible gas GAS is reduced or maintained along the time axis.

In an embodiment of the present disclosure, when the gas GAS or the fluid injected into the inside pressure PI is considered compressible or incompressible, despite the change in relative ratio between the gas GAS and the first material M1 which changes along the time axis, such incompressible gas GAS (or fluid) may be accumulated in the heating funnel 10 along with the first material M1, thereby forming the inside pressure PI of the heating funnel 10. Thus, the volume flow rate of the incompressible gas GAS may be reduced or maintained along the time axis.

In an embodiment of the present disclosure, the two-way pressure control unit 100 may include:

a first fluid tube 110 extending towards the heating funnel 10 from a common joining point COM;
a second fluid tube 120 connected to a positive pressure source PS from the common joining point COM; and
a third fluid tube 130 connected to a negative pressure source NS from the common joining point COM.

In an embodiment of the present disclosure, the two-way pressure control unit 100 may include:

a first fluid valve 111 arranged on the first fluid tube 110 and connected between the common joining point COM and the heating funnel 10;
a second fluid valve 121 arranged on the second fluid tube 120 and connected between the common joining point COM and the positive pressure source PS; and
a third fluid valve 131 arranged on the third fluid tube 130 and connected between the common joining point COM and the negative pressure source NS.

In an embodiment of the present disclosure, the two-way pressure control unit 100 may include a valve controller 150 connected to each of the first to third fluid valves 111, 121, and 131 and configured to apply a control signal for controlling opening/closing and an opening degree of each of the first to third fluid valves 111, 121, and 131.

In an embodiment of the present disclosure, the valve controller 150 may

control and open the first and second fluid valves 111 and 121 to set the pressure difference PIO between the inside and the outside of the heating funnel 10 as a positive pressure and

control and open the first and third fluid valves 111 and 131 to set the pressure difference PIO between the inside and the outside of the heating funnel 10 as a negative pressure.

In an embodiment of the present disclosure, the valve controller 150 may

control the first to third fluid valves 111, 121, and 131 to alternately open/close the second and third fluid valves 121 and 131 respectively connected to the positive pressure source PS and the negative pressure source NS while the first fluid valve 111 is open such that the pressure difference PIO between the inside and the outside of the heating funnel 10 is alternately reversed between a positive pressure and a negative pressure.

For example, the valve controller 150 may control the valves

such that the opening/closing of the second fluid valve 121 connected to the positive pressure source PS and the opening/closing of the third fluid valve 131 connected to the negative pressure source NS are alternated.

In an embodiment of the present disclosure, the two-way pressure control unit 100 may include:

a first pressure gauge 115 arranged on the first fluid tube 110 and connected between the heating funnel 10 and the first fluid valve 111;
a second pressure gauge 125 arranged on the second fluid tube 120 and connected between the positive pressure source PS and the second fluid valve 121; and
a third pressure gauge 135 arranged on the third fluid tube 130 and connected between the negative pressure source NS and the third fluid valve 131.

In an embodiment of the present disclosure, the first pressure gauge 115 may measure the inside pressure PI of the heating funnel 10, and

the second and third pressure gauges 125 and 135 may respectively measure pressures of the positive pressure source PS and the negative pressure source NS.

A multi-phase 3D printing apparatus according to an embodiment of the present disclosure may include a control unit 151 configured to

calculate the application volume V per unit hour according to the scan velocity per unit hour which corresponds to the transfer velocity and the width w of the scan line SL forming the transfer path of the first discharge nozzle 10a and

set the pressure difference PIO between the inside and the outside of the heating funnel 10 as a positive pressure to accelerate the fluid flow of the first material M1 in liquid phase or set the pressure difference PIO between the inside and the outside of the heating funnel 10 as a positive pressure to decelerate or apply a brake to the fluid flow of the first material M1 in liquid phase, according to the calculated application volume V per unit hour, and
the valve controller 150 may control the opening/-
closing and the opening degree of the first to third
fluid valves 111, 121, and 131 such that the inside
pressure PI measured from the first pressure gauge
115 follows the pressure difference PIO between the
inside and the outside of the heating funnel 10 set as
a positive pressure or a negative pressure by the
control unit 151.

Hereinafter, an aspect of the multi-phase 3D printing apparatus according to an embodiment of the present disclosure is further described.

In an embodiment of the present disclosure, the two-way pressure control unit 100 connected to the heating funnel 10 in fluidic sense may have a structure in which three branches (corresponding to the first to third fluid tube 130) including a branch (corresponding to the second fluid tube 120) connected to the positive pressure source PS to generate the pressure difference PIO between the inside and the outside of the heating funnel 10 as a positive pressure, a branch (corresponding to the third fluid tube 130) connected to the negative pressure source NS to generate the pressure difference PIO between the inside and the outside of the heating funnel 10 as a negative pressure, and a branch (corresponding to the first fluid tube 110) extending towards the heating funnel 10 from the common joining point COM with the positive pressure source PS and the negative pressure source NS are connected to each other at the common joining point COM. More specifically, the two-way pressure control unit 100 may include the first fluid tube 110 extending towards the heating funnel 10 from the common joining point COM, the second fluid tube 120 extending towards the positive pressure source PS from the common joining point COM, and the third fluid tube 130 extending towards the negative pressure source NS from the common joining point COM.

In an embodiment of the present disclosure, the two-way pressure control unit 100 may provide a positive pressure for the heating funnel 10 through the first fluid tube 110 connected to the second fluid tube 120 via the common joining point COM through the control for opening of the second fluid tube 120 connected to the positive pressure source PS or the opening degree of the opened second fluid tube 120, and the two-way pressure control unit 100 may provide a negative pressure for the heating funnel 10 through the first fluid tube 110 connected to the third fluid tube 130 via the common joining point COM through the control for opening of the third fluid tube 130 connected to the negative pressure source NS or the opening degree of the opened third fluid tube 130.

In an embodiment of the present disclosure, when a positive pressure is provided with respect to the heating funnel 10, a positive pressure between the inside and the outside of the heating funnel 10 (e.g., inside pressure of the heating funnel 10 > outside pressure PO of the heating funnel 10) may be formed to accelerate the fluid velocity of the fluid flow of the first material M1 in liquid phase discharged from the inside of the heating funnel 10 onto the stage S or to implement a uniform velocity fluid or the steady state by deducting the pressure loss caused to the fluid flow of the first material M1 from the pressure difference PIO between the inside and the outside of the heating funnel 10 (positive pressure).

In an embodiment of the present disclosure, when a negative pressure is provided with respect to the heating funnel 10, a negative pressure between the inside and the outside of the heating funnel 10 (e.g., inside pressure PI of the heating funnel 10 < outside pressure PO of the heating funnel 10) may be formed to decelerate the fluid velocity of the fluid flow of the first material M1 in liquid phase discharged from the inside of the heating funnel 10 onto the stage S. For example, in an embodiment of the present disclosure, the fluid flow of the first material M1 in liquid phase discharged from the inside of the heating funnel 10 onto the stage S may be limited (for example, the fluid velocity formed to be substantially zero or a negative value- a negative fluid velocity of the fluid flow of the first material M1 from the first discharge nozzle 10a towards the inside of the heating funnel 10). For example, the fluid velocity of the fluid flow of the first material M1 obtained from a previous positive value may be decelerated. The fluid flow may be stopped or by providing a negative pressure to the fluid flow of the first material M1, the fluid direction of the metal fluid of the first material M1 may be reversed towards a negative direction towards the heating funnel 10 from the first discharge unit. In an embodiment of the present disclosure, the two-way pressure control unit 100 may provide extrusion force towards the stage S from the inside of the heating funnel 10 from a positive pressure or may provide suction force for applying a brake to the fluid flow towards the stage S from the inside of the heating funnel 10 or reversing a direction for the fluid flow towards the inside of the heating funnel 10 from the stage S.

In an embodiment of the present disclosure, the two-way pressure control unit 100 may include the first fluid valve 111 connected between the common joining point COM and the heating funnel 10, the second fluid valve 121 connected between the common joining point COM and the positive pressure source PS, and the third fluid valve 131 connected between the common joining point COM and the negative pressure source NS and may further include the valve controller 150 connected to each of the first to third fluid valves 111, 121, and 131 and configured to apply a control signal to control opening/-closing and an opening degree of each of the first to third fluid valves 111, 121, and 131. For example, in an embodiment of the present disclosure, the valve controller 150 may control and open the first and second fluid valves 111 and 121 to set the pressure difference PIO between the inside and the outside of the heating funnel 10 as a positive pressure and may control and open the first and third fluid valves 111 and 131 to set the pressure difference PIO between the inside and the outside of the heating funnel 10 as a negative pressure. For example, in an embodiment of the present disclosure, to alternately reverse the pressure difference PIO between the inside and the outside of the heating funnel 10 between a positive pressure and a negative pressure, the valve controller 150 may control the first to third fluid valves 111, 121, and 131 to alternately open/close the second and third fluid valves 121 and 131 respectively connected to the positive pressure source PS and the negative pressure source NS while the first fluid valve 111 is open. More specifically, the valve controller 150 may control the valves to alternate the opening/closing of the second fluid valve 121 connected to the positive pressure source PS and the opening/closing of the third fluid valve 131 connected to the negative pressure source NS.

In an embodiment of the present disclosure, the two-way pressure control unit 100 may include a fluid device configured to output a mechanical pressure difference from an electric input, as the positive pressure source PS and the negative pressure source NS, and the fluid device may include an inlet on a low-voltage side and an outlet on a high-voltage side. For example, in an embodiment of the present disclosure, the positive pressure source PS connected to the second fluid tube 120 of the two-way pressure control unit 100 may include a compressor configured to inject the gas GAS into the heating funnel 10 through the outlet on the high-voltage side at a high pressure, and the negative pressure source NS connected to the third fluid tube 130 of the two-way pressure control unit 100 may include a vacuum pump for discharging the gas GAS from the heating funnel 10 through the inlet on the low-voltage side at a low pressure. In various embodiments of the present disclosure, the positive pressure source PS connected to the second fluid tube 120 may include a storage tank of high pressure which has a pressure higher than the inside pressure PI of the heating funnel 10 and is capable of injecting the gas GAS into the heating funnel 10 at a high pressure according to the opening/closing of the second fluid valve 121 for regulating the connection of the second fluid tube 120, and the negative pressure source NS connected to the third fluid tube 130 may include a storage tank of low pressure which has a pressure lower than the inside pressure PI of the heating funnel 10 and is capable of discharging the gas GAS from the heating funnel 10 at a low pressure according to the opening/closing of the third fluid valve 131 for regulating the connection of the third fluid tube 130.

In an embodiment of the present disclosure, the two-way pressure control unit 100 may set the pressure difference PIO between the inside and the outside of the heating funnel 10 as a positive pressure according to the opening of the second fluid valve 121 for regulating the connection of the second fluid tube 120 connected to the positive pressure source PS and may set the pressure difference PIO between the inside and the outside of the heating funnel 10 as a negative pressure according to the opening of the third fluid valve 131 for regulating the connection of the third fluid tube 130 connected to the negative pressure source NS. More specifically, according to the control by the two-way pressure control unit 100 for setting the pressure difference PIO between the inside and the outside of the heating funnel 10 as a positive pressure or a negative pressure, the regulation of the second fluid tube 120 connected to the positive pressure source PS and the regulation of the third fluid tube 130 connected to the negative pressure source NS may be alternated. For example, according to the control by the two-way pressure control unit 100 for setting the pressure difference PIO between the inside and the outside of the heating funnel 10 as a positive pressure, the shut-off of the third fluid tube 130 (shut-off of the third fluid valve 131) connected to the negative pressure source NS may be performed simultaneously with the connection with the second fluid tube 120 connected to the positive pressure source PS (opening of the second fluid valve 121), and according to the control by the two-way pressure control unit 100 for setting the pressure difference PIO between the inside and the outside of the heating funnel 10 as a negative pressure, the shut-off of the second fluid tube 120 (shut-off of the second fluid valve 121) connected to the positive pressure source PS may be performed simultaneously with the connection with the third fluid tube 130 connected to the negative pressure source NS (opening of the third fluid valve 131). In addition, for the pressure setting of the heating funnel 10 by the two-way pressure control unit 100, in both of the control for setting the pressure difference PIO between the inside and the outside of the heating funnel 10 as a positive pressure and the control for setting the pressure difference PIO between the inside and the outside of the heating funnel 10 as a negative pressure, the pressure may be delivered towards the heating funnel 10 from the positive pressure source PS and the negative pressure source NS through the connection with the first fluid tube 110. More specifically, in the control for setting the pressure difference PIO between the inside and the outside of the heating funnel 10 as a positive pressure, through the connection with the second fluid tube 120 connected to the positive pressure source PS and the connection with the first fluid tube 110, the positive pressure source PS and the heating funnel 10 may be connected to each other in fluidic sense, and to this end, both of the first fluid valve 111 regulating the first fluid tube 110 and the second fluid valve 121 regulating the second fluid tube 120 may be open. In the control for setting the pressure difference PIO between the inside and the outside of the heating funnel 10 as a negative pressure, through the connection with the third fluid tube 130 connected to the negative pressure source NS and the connection with the first fluid tube 110, the negative pressure source NS and the heating funnel 10 may be connected to each other in fluidic sense, and to this end, both of the first fluid valve 111 regulating the first fluid tube 110 and the third fluid valve 131 regulating the third fluid tube 130 may be open.

That is, in an embodiment of the present disclosure, to precisely control the fluid flow of the first material M1 from the heating funnel 10 towards the stage S, for example, the fluid flow of the fluid flow of the first material M1 may need to be precisely controlled to fill up the application volume V per unit hour without any excess or shortage which may be set from transfer path of the first discharge nozzle 10a for discharging the fluid flow of the first material M1 (e.g., the width w of the scan line SL forming the transfer path) and the transfer velocity (e.g., the length L of the scan line SL per unit hour corresponding to the transfer velocity). To this end, in an embodiment of the present disclosure, the two-way pressure control unit 100 may alternately reverse the pressure difference PIO between the inside and the outside of the heating funnel 10 between a positive pressure and a negative pressure, and the valve controller 150 configured to control the opening/closing of the first to third fluid valves 111, 121, and 131 may control the opening/closing of the first to third fluid valves 111, 121, and 131 to open the first fluid valve 111 to control the regulation of the first fluid tube 110 for connection with the first fluid tube 110 and to alternate the opening/closing of the second fluid valve 121 for regulation of the second fluid tube 120 connected to the positive pressure source PS and the opening/closing of the third fluid valve 131 for regulation of the third fluid tube 130 connected to the negative pressure source NS such that the pressure difference is reversed alternately between a positive pressure and a negative pressure. For example, in an embodiment of the present disclosure, the valve controller 150 configured to control the opening/closing of the first to third fluid valves 111, 121, and 131 may control the opening/closing of the first to third fluid valves 111, 121, and 131 to open the first fluid valve 111 and alternate the opening/closing of the second and third fluid valves 121 and 131 such that the pressure difference PIO between the inside and the outside of the heating funnel 10 is alternated between a positive pressure and a negative pressure.

In an embodiment of the present disclosure, the two-way pressure control unit 100 may include the first pressure gauge 115 connected between the heating funnel 10 and the first fluid valve 111, the second pressure gauge 125 connected between the positive pressure source PS and the second fluid valve 121, and the third pressure gauge 135 connected between the negative pressure source NS and the third fluid valve 131, and the first to third pressure gauges 135 of the two-way pressure control unit 100 may measure the inside pressure PI of the heating funnel 10, the pressure of the positive pressure source PS, and the pressure of the negative pressure source NS. For example, according to the closing of the first to third fluid valves 111, 121, and 131 connected to the first to third pressure gauge 135, the first pressure gauge 115 may measure the inside pressure PI of the heating funnel 10 according to the closing of the first fluid valve 111, the second pressure gauge 125 may measure the pressure of the positive pressure source PS according to the closing of the second fluid valve 121, and the third pressure gauge 135 may measure the pressure of the negative source according to the closing of the third fluid valve 131. For example, in an embodiment of the present disclosure, the first pressure gauge 115 may be arranged on the first fluid tube 110 and connected between the heating funnel 10 and the first fluid valve 111 and measure the inside pressure PI of the heating funnel 10 (for example, when the first fluid valve 111 is closed) or the fluid pressure of the gas GAS in the first fluid tube 110 (for example, when the first fluid valve 111 is open) according to the opening/closing of the first fluid valve 111. Considering the fact that the flow velocity of the gas GAS is generally limited, the first pressure gauge 115 may be considered as measuring the inside pressure PI of the heating funnel 10. The second pressure gauge 125 may be arranged on the second fluid tube 120 and connected between the positive pressure source PS and the second fluid valve 121 and measure the pressure of the positive pressure source PS (for example, when the second fluid valve 121 is closed) or the fluid pressure of the gas GAS in the second fluid tube 120 (for example, when the second fluid valve 121 is open) according to the opening/closing of the second fluid valve 121. Considering the fact that the flow velocity of the gas GAS is generally limited, the second pressure gauge 125 may be considered as measuring the pressure of the positive pressure source PS or the pressure of the gas GAS supplied from the positive pressure source PS. The third pressure gauge 135 may be arranged on the third fluid tube 130 and connected between the negative pressure source NS and the third fluid valve 131 and measure the pressure of the negative pressure source NS (for example, when the third fluid valve 131 is closed) or the fluid pressure of the gas GAS in the third fluid tube 130 (for example, when the third fluid valve 131 is open) according to the opening/closing of the third fluid valve 131. Considering the fact that the flow velocity of the gas GAS is generally limited, the third pressure gauge 135 may be considered as measuring the pressure of the negative pressure source NS or the pressure of the gas GAS discharged from the negative pressure source NS.

In an embodiment of the present disclosure, the pressure difference PIO between the inside and the outside of the heating funnel 10 may be identified according to the inside pressure PI of the heating funnel 10 measured by the first pressure gauge 115 or the inside pressure PI of the heating funnel 10 based on the outside atmospheric pressure (1atm), and the volume of the gas GAS injected per unit hour into the heating funnel 10 may be calculated to fill without any excess or shortage the application volume V per unit hour of the first material M1 set from the transfer path (the width w of the scan line SL forming the transfer path) and the transfer velocity (the length L of the scan line SL per unit hour corresponding to the transfer velocity). To precisely control the volume of the gas GAS injected per unit hour into the heating funnel 10, the opening degree of the first and second fluid valves 111 and 121 may be controlled according to the pressure difference between the first and second pressure gauges 125 in a section where the pressure difference PIO between the inside and the outside of the heating funnel 10 is controlled to be a positive pressure, and the opening degree of the first and third fluid valves 111 and 131 may be controlled according to the pressure difference between the first and third pressure gauges 135 in a section where the pressure difference PIO between the inside and the outside of the heating funnel 10 is controlled to be a negative pressure.

In an embodiment of the present disclosure, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, according to the shortage of the application volume V per unit hour of the first material M1 which is set according to the transfer path and the transfer velocity of the first discharge nozzle 10a or

decelerate the fluid flow of the first material M1 from the heating funnel 10 towards the first discharge nozzle 10a or apply a brake to the fluid flow of the first material M1 by setting the pressure difference PIO between the inside and the outside of the heating funnel 10 as a negative pressure, according to the excess of the application volume V per unit hour of the second material M2, which is set according to the transfer path and the transfer velocity of the first discharge nozzle 10a.

In an embodiment of the present disclosure, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, according to the increase in the width w of the scan line SL forming the transfer path of the first discharge nozzle 10a or

decelerate the fluid flow of the first material M1 from the heating funnel 10 towards the first discharge nozzle 10a or apply a brake to fluid flow of the first material M1 by setting the pressure difference PIO between the inside and the outside of the heating funnel 10 as a negative pressure, according to the decrease in the width w of the scan line SL forming the transfer path of the first discharge nozzle 10a.

For example, the width w of the scan line SL forming the transfer path of the first discharge nozzle 10a may be set to entirely scan the shaping area in which the object is formed and to avoid an overlap or distance therebetween and a void.

For example, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, in correspondence with a relatively high transfer velocity or a relatively long length L of the scan line SL per unit hour, according to the transfer velocity of the first discharge nozzle 10a or the length L of the scan line SL per unit hour corresponding to the transfer velocity or

decelerate the fluid flow of the first material M1 from the heating funnel 10 towards the first discharge nozzle 10a or apply a brake to the fluid flow of the first material M1 by setting the pressure difference PIO between the inside and the outside of the heating funnel 10 as a negative pressure, in correspondence with a relatively low transfer velocity or a relatively short length L of the scan line SL per unit hour, according to the transfer velocity of the first discharge nozzle 10a or the length L of the scan line SL per unit hour corresponding to the transfer velocity.

For example, the two-way pressure control unit 100 may accelerate or decelerate the fluid flow of the first material M1 from the heating funnel 10 towards the first discharge nozzle 10a or apply a brake to the fluid flow of the first material M1 by setting the pressure difference PIO between the inside and the outside of the heating funnel 10 as a positive pressure or a negative pressure, according to the application volume V per unit hour of the first material M1, which is set according to the transfer path and the transfer velocity of the first discharge nozzle 10a.

The application volume V per unit hour of the first material M1 may be calculated by multiplying the length L of the scan line SL per unit hour corresponding to the scan velocity and the cross-sectional surface of the scan line SL including the width w dimension of the scan line SL or the width w of the scan line SL forming the transfer path.

Hereinafter, an aspect of the multi-phase 3D printing apparatus according to an embodiment of the present disclosure is further described.

In an embodiment of the present disclosure, the two-way pressure control unit 100 providing a pressure in two reversed ways, i.e., a positive pressure and a negative pressure may control the fluid flow of the first material M1 proceeding towards the stage S from the inside of the heating funnel 10 and forming an object (fluid velocity and fluid direction) and may precisely control the fluid flow of the first material M1 discharged onto the stage S by properly controlling the application volume V per unit hour according to the first discharge nozzle 10a transferred to follow in real time a transfer plan including a transfer velocity and a transfer path which are preset such that an excess or a shortage of the preset application volume V is caused.

For example, in an embodiment of the present disclosure, when the fluid flow of the first material M1 discharged from the first discharge nozzle 10a is discharged in an amount insufficient for following the preset transfer plan, a gap may be generated at a part of the application volume V on the transfer path, and accordingly, on the transfer path, an empty space in the object which is not filled by the first material M1, i.e., a void in the objet may be formed. Unlike the above, in an embodiment of the present disclosure, when the fluid flow of the first material M1 discharged from the first discharge nozzle 10a is discharged too much to follow the preset transfer plan, an excessive volume over the preset application volume V may be formed additionally on the transfer path, and accordingly, the additional excessive volume may form an excessive height higher than an upper limit defined by the filler space surrounded by the first material M1 forming the outline of the objet. When forming the outline of the object, the height stability of the second material M2 may be damaged due to collapse of a dam of the second material M2 limiting the fluid flow of the first material M1, or the degree of precision in shaping the object may be damaged by the excessive volume beyond the outline. Or, due to the excessive volume exceeding the height of each of the layers forming the object, the application volume V of a subsequent layer may need to be changed.

In an embodiment of the present disclosure, the shaping of the object may be implemented by the transfer of the second discharge nozzle 20a discharging the second material M2 forming an outline of the object and the transfer of the first discharge nozzle 10a discharging the first material M1 forming the inside of the object formed of the first material M1, i.e., the object itself. For example, the transfer plan for the first and second discharge nozzles 10a and 20a for shaping of the object may include preset settings regarding the transfer path and the transfer velocity of the second discharge nozzle 20a following a profile of the outline forming a silhouette the object, the application volume V per unit hour of the first material M1 set according to the transfer path and the transfer velocity of the first discharge nozzle 10a, the transfer path and the transfer velocity of the first discharge nozzle 10a scanning an inner area of the outline of the object to shape the object itself as the inner area of the outline of the object surrounded by the second material M2, and the application volume V per unit hour of the first material M1 set according to the transfer path and the transfer velocity of the first discharge nozzle 10a.

In an embodiment of the present disclosure, the application volume V per unit hour of the first material M1 may be set according to the transfer path of the first discharge nozzle 10a discharging the first material M1 or the width w of the scan line SL forming the transfer path. For example, even for the same inner area of the outline of the object, the application volume V of the second material M2 set according to the transfer path or the width w of the scan line SL may vary according to the preset transfer path or the width w of the scan line SL. For example, according to the transfer path or the width w of the scan line SL, the count of scan lines SL used to shape the width of the object may vary, and the application volume V per unit hour of the first material M1 may vary according to the transfer path or the width w of the scan line SL. For example, the width w of the scan line SL for forming the same width may be set precisely to avoid an overlap, a distance, or a void, and the application volume V of the first material M1 may be set according to the scan line SL based on the width w of the scan line SL.

As illustrated in FIG. 15, the application volume V per unit hour of the first material M1 may be set according to the transfer path of the first discharge nozzle 10a of the width w of the scan line SL, and for example, the application volume V per unit hour of the first material M1 may be calculated by multiplying the length L of the scan line SL of the first discharge nozzle 10a per unit hour which corresponds to the transfer velocity of the first discharge nozzle 10a discharging the first material M1 and the width w of the scan line SL forming the transfer path. For example, in an embodiment of the present disclosure, according to the fluidity of the first material M1 in liquid phase, the width w of the scan line SL of the first discharge nozzle 10a may be formed to have a rounded cross-sectional shape rather than an angular cross-sectional shape such as a rectangular shape as the first material M1 flows to both sides from the top height formed by the first material M1. For example, the shape of the cross-section of the application volume V according to an embodiment of the present disclosure may be assumed to be a rounded shape that is spread to positions on both sides in the direction of the width w of the scan line SL according to the fluidity of the first material M1 in liquid phase from a position on the stage S facing the first discharge nozzle 10a, i.e., from the top height formed at a central position in the direction of the width w of the scan line SL. As such, as for the cross-section of the application volume V, the volume extending by the length L of the scan line SL per unit hour may be assumed as the application volume V per unit hour of the first material M1. For example, in an embodiment of the present disclosure, the application volume V may have a cross-section having a box shape formed at a central position in the width w of the scan line SL and a semicircular shape formed on both side positions on the box shape, and the cross-sectional shape of combined box shape and semicircular shape may be assumed as the volume extending along the scan length of the first discharge nozzle 10a.

According to the foregoing, the application volume V per unit hour of the first material M1 may be calculated as below:

$$V = \pi \times \left(\frac{h}{2}\right)^2 \times (W \times h) \times L$$

L represents a distance of the scan line SL per unit hour.

In an embodiment of the present disclosure, the application volume V of the first material M1 forming the inner area of the object surrounded by the outline of the object or the object itself may be calculated from the width w of the scan line SL forming the transfer path of the first discharge nozzle 10a discharging the first material M1 and the length L of the scan line SL per unit hour corresponding to the transfer velocity of the first discharge nozzle 10a, and the application volume V of the first material M1 discharged from the first discharge nozzle 10a may be calculated from the transfer velocity and the transfer path of the first discharge nozzle 10a which may be set by the transfer plan for the first discharge nozzle 10a.

In an embodiment of the present disclosure, before the first and second discharge nozzles 10a and 20a for shaping of the object are operated, the transfer plan for the first and second discharge nozzles 10a and 20a including presettings regarding the transfer path of the first and second discharge nozzles 10a and 20a, the transfer velocity, and the application volume V of the first and second materials M1 and M2 set according to the transfer path and the transfer velocity may be established, and to discharge the first and second materials M1 and M2 through the first and second discharge nozzles 10a and 20a without an excess or a shortage against the preset application volume V of the first and second materials M1 and M2, in an embodiment of the present disclosure, the inside pressure PI of the heating funnel 10 in which the first material M1 is filled in liquid phase, more accurately, the pressure difference PIO between the inside and the outside of the heating funnel 10 may be generated such that the discharge amount of the first material M1 discharged through the first discharge nozzle 10a fills the preset application volume V of the first material M1 without an excess or a shortage. To form such pressure difference PIO between the inside and the outside of the heating funnel 10, the injection of the gas GAS into the heating funnel 10 or the discharge of the gas GAS from the heating funnel 10 may be controlled. More specifically, the two-way pressure control unit 100 connected to the heating funnel 10 may control the inside pressure PI of the heating funnel 10 in two ways, i.e., a positive pressure or a negative pressure to accelerate or decelerate the fluid velocity of the fluid flow of the first material M1 from the inside of the heating funnel 10 towards the stage S.

In an embodiment of the present disclosure, in the transfer plan for the first and second discharge nozzles 10a and 20a which is set before the first and second discharge nozzles 10a and 20a are operated, the transfer velocity of the first and second discharge nozzles 10a and 20a may vary according to the outline shape of the object or the shape of the scan line SL scanning the inner area of the object. For example, when the outline of the object or the scan line SL forming the surface of the object includes an angular corner, the first and second discharge nozzles 10a and 20a may be transferred at a relatively delayed transfer velocity, and on the contrary, when the outline of the object or the scan line SL forming the inner area of the object extends in a stripe pattern in one direction, the first and second discharge nozzles 10a and 20a may be transferred at a relatively high transfer velocity. As such, according to the varying transfer velocity and the application volume V of the first and second materials M1 and M2 which varies according to the transfer velocity, the discharge velocity of the first and second materials M1 and M2 discharged from the first and second discharge nozzles 10a and 20a may be controlled. For example, to control the discharge velocity of the first and second materials M1 and M2, e.g., the discharge velocity of the first material M1 (acceleration or deceleration of the fluid flow of the first material M1), the inside pressure PI of the heating funnel 10 in which the first material M1 is filled may be controlled. For example, in the scan line SL where the transfer velocity of the first discharge nozzle 10a discharging the first material M1 is relatively delayed, to delay the discharge velocity of the first material M1, the inside pressure PI of the heating funnel 10 in which the first material M1 in liquid phase is filled may be set as a relatively small-scale positive pressure, or considering the fact that the resolution may relatively decrease in an input/output relation between an input, i.e., the control of the inside pressure PI of the heating funnel 10 and an output, i.e., the change in the fluid velocity of the fluid flow of the first material M1 from the inside of the heating funnel 10 toward the stage S, in the scan line SL of relatively delayed transfer velocity, the inside pressure PI of the heating funnel 10 may be controlled to be alternated between a positive pressure and a negative pressure. For example, when the inside pressure PI of the heating funnel 10 is set as a positive pressure to accelerate the fluid velocity of the first material M1, and then the preset fluid velocity or the discharge amount of the first material M1 is achieved, the inside pressure PI of the heating funnel 10 may be reversed to a negative pressure to decelerate the fluid velocity of the first material M1. In this manner, the discharge of the first material M1 and the fluid velocity of the first material M1 may be controlled to be a fluid velocity between an upper limit and a lower limit. As described above, in an embodiment where the discharge or the fluid velocity of the first material M1 is controlled by reversing the pressure between a positive pressure and a negative pressure, the time point of reversing the pressure between a positive pressure and a negative pressure may be captured by, for example, monitoring various state variables that may control the fluid velocity of the first material M1. In an embodiment of the present disclosure, the pressure-reversing point may be determined by collecting various state variables that may be measured or monitored at various positions, e.g., the inside pressure PI of the heating funnel 10 in which the first material M1 is filled, the fluid velocity of the fluid flow of the first material M1 from the inside of the heating funnel 10 towards the outside, the discharge or the discharge velocity of the first material M1 discharged from the inside of the heating funnel 10 towards the stage S, and the accumulation velocity of the first material M1 accumulated onto the stage S.

In an embodiment of the present disclosure, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, according to the shortage of the application volume V per unit hour of the first material M1 which is set according to the transfer path and the transfer velocity of the first discharge nozzle 10a or

decelerate the fluid flow of the first material M1 from the heating funnel 10 towards the first discharge nozzle 10a or apply a brake to the fluid flow of the first material M1 by setting the pressure difference PIO between the inside and the outside of the heating funnel 10 as a negative pressure, according to the excess of the application volume V per unit hour of the second material M2, which is set according to the transfer path and the transfer velocity of the first discharge nozzle 10a.

More specifically, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, according to the increase in the width w of the scan line SL forming the transfer path of the first discharge nozzle 10a or

decelerate the fluid flow of the first material M1 from the heating funnel 10 towards the first discharge nozzle 10a or apply a brake to fluid flow of the first material M1 by setting the pressure difference PIO between the inside and the outside of the heating funnel 10 as a negative pressure, according to the decrease in the width w of the scan line SL forming the transfer path of the first discharge nozzle 10a.

For example, the two-way pressure control unit 100 may

accelerate the fluid flow of the first material M1 from the heating funnel 10 towards the first discharge nozzle 10a by setting the pressure difference PIO between the inside and the outside of the heating funnel 10 as a positive pressure, in correspondence with a relatively high transfer velocity or a relatively long length L of the scan line SL per unit hour, according to the transfer velocity of the first discharge nozzle 10a or the length L of the scan line SL per unit hour corresponding to the transfer velocity or

decelerate the fluid flow of the first material M1 from the heating funnel 10 towards the first discharge nozzle 10a or apply a brake to the fluid flow of the first material M1 by setting the pressure difference PIO between the inside and the outside of the heating funnel 10 as a negative pressure, in correspondence with a relatively low transfer velocity or a relatively short length L of the scan line SL per unit hour, according to the transfer velocity of the first discharge nozzle 10a or the scan distance per unit hour corresponding to the transfer velocity.

In an embodiment of the present disclosure, by measuring and controlling the inside pressure PI of the heating funnel 10 in which the first material M1 is filled among the state variables described above (by the first pressure gauge 115), the discharge amount or the discharge velocity of the first material M1 may be controlled, and for example, the rather than the measurement of control of the state variable that is difficult to measure, such as a discharge amount or a discharge velocity of the first material M1, by directly controlling the fluid velocity of the first material M1 promptly according to the inside pressure PI of the heating funnel 10, which may be easily measured by the first pressure gauge 115 connected to the heating funnel 10, the rapidity of the control in the input/output relation concerning the control may be improved.

Regardless of the scan line SL to which a relatively delayed transfer velocity is set according to the transfer velocity of the first discharge nozzle 10a or the scan line SL to which a relatively high transfer velocity is set, the two-way pressure control unit 100 connected to the heating funnel 10 may be controlled by applying a certain positive pressure to both of the scan line SL in which the transfer velocity of the first discharge nozzle 10a varies and the scan line SL to which a constant transfer velocity is set. Rather than the foregoing, in an embodiment of the present disclosure, the two-way pressure control unit 100 connected to the heating funnel 10 may be controlled by alternately reversing the pressure between a positive pressure and a negative pressure.

In various embodiment of the present disclosure, a constant or variable transfer velocity or a discharge amount or a discharge velocity of the first material M1 a linked with the transfer velocity may be followed by alternately reversing the inside pressure PI of the heating funnel 10 between a positive pressure and a negative pressure according to a difference between the inside pressure PI of the heating funnel 10 set to be in accordance with the preset transfer velocity of the first discharge nozzle 10a and the inside pressure PI of the heating funnel 10 measured in real time or a difference between the discharge amount or the discharge velocity of the first material M1 set to be in accordance with the preset transfer velocity of the first discharge nozzle 10a and the discharge amount or the discharge velocity of the first material M1 measured in real time.

A multi-phase 3D printing apparatus according to an embodiment of the present disclosure includes:

> a sealing cover CV covering and sealing a top inlet of the heating funnel 10 and combined to face the heating funnel 10; and
> a sealing gasket GA arranged between the heating funnel 10 and the sealing cover CV and sealing a gap between the heating funnel 10 and the sealing cover CV.

For example, the heating funnel 10 may include a sealing flange 10f formed along an outer circumferential edge of the inlet, and

The sealing gasket GA may be arranged between the sealing cover CV and the sealing flange 10f of the heating funnel 10 which are combined together by a fastening member passing through the sealing cover CV of a plate shape and the sealing flange 10f of the heating funnel 10 which are arranged in parallel with each other.

For example, the heating funnel 10 and the sealing cover CV may include a metal material including a surface coating layer.

For example, the sealing gasket GA may include stacked matrix sheets and a ceramic fiber arranged between the matrix sheets.

Hereinafter, an aspect of the multi-phase 3D printing apparatus according to an embodiment of the present disclosure is further described in detail.

In an embodiment of the present disclosure, the inside of the heating funnel 10 may be a closed space such that the inside pressure PI of the heating funnel 10 is controlled by the two-way pressure control unit 100 connected to the heating funnel 10 in fluidic sense. In an embodiment of the present disclosure, the inside space of the heating funnel 10 may be formed as a closed space sealed against the external environment such that the fluid flow of the first material M1 filled inside the heating funnel 10 or the inside pressure PI of the heating funnel 10 may be controlled according to the provision of a positive pressure or a negative pressure according to the control by the two-way pressure control unit 100 connected to the inside space or according to the discharge of the first material M1 from the first discharge nozzle 10a connected to the bottleneck of the heating funnel 10. The inside space of the heating funnel 10 forming such closed space may form the inside pressure PI according to the injection/discharge of the material filling the inside space. For example, the inside pressure PI of the heating funnel 10 may be completely controlled according to the discharge of the first material M1 and the injection or discharge of the gas GAS under the control by the two-way pressure control unit 100, and any change that may be caused to the inside pressure PI of the heating funnel 10 by external environment may be blocked. For example, in an embodiment of the present disclosure, the control of the inside pressure PI of the heating funnel 10 that is not sealed from the external environment may not be completely performed by the two-way pressure control unit 100 due to a leakage of the pressure between the external environment and the inside pressure PI.

In an embodiment of the present disclosure, the heating funnel 10 connected to the two-way pressure control unit 100 in fluidic sense may be formed as a closed space sealed from the external environment, and by providing a positive pressure or a negative pressure to the closed space, the pressure control of the closed space sealed from the external environment may be fully performed by the two-way pressure control unit 100.

In an embodiment of the present disclosure, the sealing of the inside space of the heating funnel 10 may be implemented by the sealing cover CV covering the inlet formed at the top of the heating funnel 10 and the sealing gasket GA arranged between the sealing cover CV and the inlet of the heating funnel 10. In an embodiment of the present disclosure, the heating funnel 10 may include the sealing flange 10f formed along an outer circumference of the inlet at the top of the heating funnel 10, and through the fastening member fastening a gap between the sealing flange 10f of the heating funnel 10 and the sealing cover CV formed in a plate shape, the sealing flange 10f of the heating funnel 10 and the sealing cover CV may be combined facing each other. For example, as the position of the edge of the heating funnel 10 on which the sealing flange 10f is formed and the position of the edge of the sealing cover CV have a flat shape in parallel with each other and face each other, the fastening member may be engaged to sequentially penetrate the position of the edge of the heating funnel 10 on which the sealing flange 10f is formed and the position of the edge of the sealing cover CV to combine the heating funnel 10 and the sealing cover CV. In an embodiment of the present disclosure, the heating funnel 10 and the sealing cover CV may include the same heat-resisting material. For example, in an embodiment of the present disclosure, the heating funnel 10 and the sealing cover CV may include a ceramic material having excellent heat-resisting characteristics or a heat-resisting metal material. In various embodiments of the present disclosure, the heating funnel 10 and the sealing cover CV may include a ceramic material or a metal material, and considering the fact that the ceramic material has excellent heat-resisting characteristics and electrically insulating characteristics, the ceramic material may be suitable for use in the heating funnel 10 and the sealing cover CV of the present disclosure. In an embodiment of the present disclosure, considering the processability of the heating funnel 10 and the sealing cover CV and the pressure loss due to the fluid friction of the first material M1 filled inside the heating funnel 10, a metal material which has excellent processability and relatively low surface roughness and thus may provide a lower fluid resistance and less pressure loss than a ceramic material may be used for the heating funnel 10 and the sealing cover CV. In an embodiment of the present disclosure, unlike the sealing cover CV formed in a plate shape, the heating funnel 10 formed in a funnel shape may be formed by using a cutting process performed on a raw metal material, and on a surface of the heating funnel 10 formed to have a relatively high roughness due to cutting marks left by a cutting tool during the cutting process performed on the raw metal material, a surface-coating layer may be formed for lowering the surface roughness of the heating funnel 10 and preventing damages such as corrosion of the heating funnel 10 that may be caused by the operational environment of the heating funnel 10 using a high temperature. In various embodiments of the present disclosure, similar to the heating funnel 10, the sealing cover CV for sealing the top inlet of the heating funnel 10 may include a metal material similar to that of the heating funnel 10 and may include a surface-coating layer like the heating funnel 10.

In an embodiment of the present disclosure, the heating funnel 10 and the sealing cover CV may be arranged such that the position of the edge of the heating funnel 10 on which the sealing flange 10f is formed and the position of the edge of the sealing cover CV are arranged in parallel with each other to face each other and may be combined facing each other by the fastening member penetrating the position of the edge of the heating funnel 10 on which the sealing flange 10f is formed and the position of the edge of the sealing cover CV. The sealing gasket GA may be arranged between the heating funnel 10 and the sealing cover CV which are combined facing each other to completely seal a gap therebetween. For example, in an embodiment of the present disclosure, the sealing gasket GA may include a material having high heat resistance and excellent sealing characteristics. For example, the sealing gasket GA may include a material having buffer characteristics or sealing characteristics, which may maintain the shape stability in a high-temperature and high-pressure environment and may be adaptively transformed according to a shape between the heating funnel 10 and the sealing cover CV. For example, in an embodiment of the present disclosure, the sealing gasket GA may include a composite material including a plurality of stacked matrix sheets and ceramic fibers arranged between the matrix sheets. In an embodiment of the present disclosure, the sealing gasket GA may be a flexible graphite & carbon gasket GA.

In an embodiment of the present disclosure, to decelerate or apply a brake to the fluid flow of the first material M1 from the inside of the heating funnel 10 towards the stage S, the pressure difference between the inside and the outside of the heating funnel 10 may be set as a negative pressure. Hereinafter, an example embodiment in which the pressure difference between the inside and the outside of the heating funnel 10 is set as a negative pressure is described.

(1) Finish point FP (see FIG. 17) of the scan line SL along the scan line SL forming the transfer path of the first discharge nozzle 10a

In an embodiment of the present disclosure, by setting the pressure difference between the inside and the outside of the heating funnel 10 in which the first material M1 is accommodated as a negative pressure at the finish point FP (see FIG. 17) of the scan line SL along the scan line SL forming the transfer path of the first discharge nozzle 10a discharging the first material M1, the fluid flow of the first material M1 may be limited promptly, and for example, in an embodiment of the present disclosure, to promptly block the inertia of the first material M1 which keeps the discharge of the first material M1 or the fluid flow of the first material M1 in the tendency of discharging the first material M1 onto the stage S along the scan line SL along which the fluid flow flows, the pressure difference between the inside and the outside of the heating funnel 10 in which the first material M1 is accommodated may be set as a negative pressure prior to the finish point FP (see FIG. 17) of the scan line SL. At the finish point FP (see FIG. 17) of the scan line SL or a position adjacent to the finish point FP (see FIG. 17), the previous positive pressure may be blocked (second fluid valve 121 off), and the negative pressure may be applied (the third fluid valve 131 on) to block the inertia of the first material M1 having the tendency of discharging the first material M1 from the heating funnel 10 towards the stage S and to promptly decelerate or limit the fluid flow of the first material M1 at the finish point FP (see FIG. 17) of the scan line SL. For example, as the first material M1 is discharged to a position out of the finish point FP (see FIG. 17) of the scan line SL of the first discharge nozzle 10a or the preset transfer path of the first discharge nozzle 10a, distortion of the shape of the object formed from the first material M1 beyond a target shape may be prevented.

For example, in an embodiment of the present disclosure, an object having a particular target shape may be shaped by taking sliced section data of the object as an input and stacking layers of the object. Each of the layers forming the object may include the start point SP (see FIG. 17) and the finish point FP (see FIG. 17) along the scan line SL forming the transfer path of the first discharge nozzle 10a or the transfer path of the first discharge nozzle 10a discharging the first material M1 forming the object itself. In this regard, at the finish point FP (see FIG. 17) of the scan line SL, the inertia of the fluid flow of the first material M1 continued along the scan line SL may be promptly shut off to prevent a continuous discharge or fluid flow of the first material M1 from the inside of the heating funnel 10 towards the stage S beyond the preset finish point FP (see FIG. 17) of the scan line SL. The third fluid valve 131 regulating the connection of the third fluid tube 130 connected to the negative pressure source NS may be turned on, and the second fluid valve 121 regulating the connection of the second fluid tube 120 connected to the positive pressure source PS may be turned off to promptly shut off the inertia of the fluid flow of the first material M1 having the tendency of proceeding from the inside of the heating funnel 10 in which the first material M1 is accommodated towards the stage S, limit the fluid flow of the first material M1, and set the pressure difference between the inside and the outside of the heating funnel 10 as a negative pressure.

In an embodiment of the present disclosure, the inertia of the fluid flow of the first material M1 proceeding from the inside of the first material M1 towards the stage S along the scan line SL may include the inertia of continuing a previous motion when there is no particular change in the pressure or the fluid resistance of the fluid flow of the first material M1. The inertia may be used in a comprehensive sense including the control by the valve controller 150 controlling the first to third fluid valve 131 and a control delay between the initiation of the control by the valve controller 150 and an actual change of the pressure difference between the inside and the outside of the heating funnel 10 in response to the control by the valve controller 150 to change the pressure difference between the inside and the outside of the heating funnel 10 to decelerate the fluid flow of the first material M1. For example, unlike the present disclosure, in a comparative example which does not include the two-way pressure control unit 100 capable of setting the pressure difference between the inside and the outside of the heating funnel 10 as a positive pressure and a negative pressure, the fluid flow of the first material M1 discharged from the first discharge nozzle 10a may be decelerated by gradually decreasing the level of the positive pressure at the finish point FP (see FIG. 17) of the first discharge nozzle 10a. However, in such comparative example, it may be difficult to promptly decelerate or to promptly apply a brake to the fluid flow of the first material M1 inclined to proceed from the inside of the heating funnel 10 towards the stage S, and as the inertia of the fluid flow of the first material M1 inclined to maintain the fluid flow of the first material M1 decreases according to a relative increase of the fluid resistance with respect to the positive pressure having a gradually decreasing level, it may take some time for the fluid flow of the first material M1 to be substantially decelerated or limited.

In an embodiment of the present disclosure, the pressure difference between the inside and the outside of the heating funnel 10 may be set as a negative pressure at the finish point FP (see FIG. 17) of the scan line SL to promptly shut off the inertia of the fluid flow of the first material M1 and limit the fluid flow of the first material M1 at the finish point FP (see FIG. 17) such that a tail of the scan line SL is not formed inside and outside of the shape of the object forming an acute stepped difference before and after the finish point FP (see FIG. 17) of the scan line SL forming the shape of the object. For example, the switching operation of turning off and turning on the second and third fluid valves 121 and 131 for regulating the connection of the second and third fluid tubes 120 and 130 respectively connected to the positive pressure source PS and the negative pressure source NS may be implemented.

(2) Application stop section ST between the start point SP (see FIG.17) and the finish point FP (see FIG. 17) of the scan line SL along the scan line SL forming the transfer path of the first discharge nozzle 10a

In an embodiment of the present disclosure, the object may be shaped by taking the sliced section data of the target object as in put and stacking the layers of the object or accumulating the turns forming the object. When the object is shaped by stacking the multiple layers or by accumulating the turns, the pressure difference between the inside and the outside of the heating funnel 10 in which the first material M1 is accommodated may be set as a negative pressure to decelerate or limit the fluid flow of the first material M1 forming the object itself between the finish point FP (see FIG. 17) of the scan line SL forming the transfer path or the transfer path of a previous layer (or previous turn) and the start point SP (see FIG. 17) of the scan line SL forming the transfer path or the transfer path of a subsequent layer (or subsequent turn). For example, in an embodiment of the present disclosure, each layer of the object may be formed according to the accumulation of the previous turn and the subsequent turn, and the object may be formed according to the stacking of the previous layer and the subsequent layer.

In an embodiment of the present disclosure, to form a target shape of the object, the application stop section ST in which application of the first material M1 is stopped may be formed between the previous layer (or previous turn) and the subsequent layer (or subsequent turn) which are stacked, and the pressure difference between the inside and the outside of the heating funnel 10 in which the first material M1 is accommodated may be set as a negative pressure to block an unintended discharge of the first material M1 in the application stop section ST between the start point SP (see FIG. 17) of the subsequent layer and the finish point FP (see FIG. 17) of the previous layer to accurately follow the application stop section ST. For example, as described above, a negative pressure applied at the finish point FP (see FIG. 17) of the scan line SL forming the transfer path of the first discharge nozzle 10a or the transfer path of the first discharge nozzle 10a discharging the first material M1, i.e., a negative pressure applied at the finish point FP (see FIG. 17) of the scan line SL at the previous layer may last until the start point SP (see FIG. 17) of the scan line SL at the subsequent layer to prevent an unintended leakage of the first material M1 during the application stop section set between the previous layer and the subsequent layer. As such, in an embodiment of the present disclosure, the fluid flow of the first material M1 in the application stop section ST may be shut off according to the setting of the pressure difference between the inside and the outside of the heating funnel 10 without a separate valve structure regulating fluidic connection of the first discharge nozzle 10a connected to the bottleneck of the heating funnel 10. In an embodiment of the present disclosure, according to the setting of the pressure applied at the finish point FP (see FIG. 17) of the scan line SL of the previous layer, at the start point SP (see FIG. 17) of the scan line SL of the subsequent layer, the fluid flow may be maintained in a stationary state by the inertia of the fluid flow of the first material M1 inclined to maintain the stationary state even when no separate negative pressure is applied until the turn-on of the second fluid valve 121 regulating the connection of the second fluid tube 120 connected to the positive pressure source PS. For example, in various embodiments of the present disclosure, as the first discharge nozzle 10a for discharging the first material M1 is moved from the finish point FP (see FIG. 17) of the previous layer to the start point SP (see FIG. 17) of the subsequent layer, at the start point SP (see FIG. 17) of the subsequent layer, the switching operation to turn on the second fluid valve 121 for regulating the connection of the second fluid tube 120 connected to the positive pressure source PS and to turn off the third fluid valve 131 for regulating the connection of the third fluid tube 130 connected to the negative pressure source NS may be implemented.

(3) Operation section T1 and T2 (see FIG. 19) of the second discharge nozzle 20a for forming the outline of the object

In an embodiment of the present disclosure, after the outline of the object is formed by operation of the second discharge nozzle 20a for forming the outline of the object, with respect to the shaping area surrounded by the outline of the object formed by the second material M2 discharged from the second discharge nozzle 20a, the first material M1 filling the inside of the shaping area surrounded by the second material M2 under the limitation of the height of the second material M2 surrounding the shaping area may be filled by operating the first discharge nozzle 10a. As such, in an embodiment of the present disclosure, the second discharge nozzle 20a discharging the second material M2 to form the outline of the object and the first discharge nozzle 10a discharging the first material M1 to form the object itself may be buried in the buried block 40 imprisoning the first and second discharge nozzles 10a and 20a, and according to such imprisonment by the buried block 40, the first and second discharge nozzles 10a and 20a may be placed at fixed positions adjacent to each other. The first and second discharge nozzles 10a and 20a may be operated alternately to alternately shape the outline forming each layer of the object and the layer structure of the object. According to the operation of the multi-phase 3D printing apparatus in an embodiment of the present disclosure, the buried block 40 imprisoning the first and second discharge nozzles 10a and 20a may include the operation section T1 (see FIG. 19) of the first discharge nozzle 10a moving along the scan line SL of the first discharge nozzle 10a or the transfer path of the first discharge nozzle 10a, or the buried block 40 may include the operation section T2 (see FIG. 19) of the second discharge nozzle 20a moving along the scan line SL of the second discharge nozzle 20a or the transfer path of the second discharge nozzle 20a. The operation sections T1 and T2 (see FIG. 19) of the first and second discharge nozzles 10a and 20a may be divided by respective exclusive time slots.

In an embodiment of the present disclosure, the operation of the first discharge nozzle 10a may be stopped during the operation section T2 (see FIG. 19) of the second discharge nozzle 20a, and the pressure difference between the inside and the outside of the heating funnel 10 in which the first material M1 is accommodated may be set as a negative pressure to cut off an unintended leakage of the first material M1 from the first discharge nozzle 10a during the operation section T2 (see FIG. 19) of the second discharge nozzle 20a. In an embodiment of the present disclosure, the fluid flow of the first material M1 may be limited according to the negative pressure set as the pressure difference between the inside and the outside of the heating funnel 10 at the finish point FP (see FIG. 17) of the operation section T1 (see FIG. 19) of the first discharge nozzle 10a or the transfer path of the first discharge nozzle 10a or the finish point FP (see FIG. 17) of the scan line SL of the first discharge nozzle 10a forming transfer path of the first discharge nozzle 10a, and according to the inertia of the first material M1 inclined to maintain the limited state of the fluid flow, a negative pressure may not be set separately after the finish point FP (see FIG. 17) of the operation section T1 (see FIG. 19) or after the finish point FP (see FIG. 17) of the scan line SL or the transfer path of the first discharge nozzle 10a. In this case, the fluid flow of the first material M1 proceeding towards the stage S from the heating funnel 10 in which the first material M1 is accommodated may remain in the stationary state.

(4) Control of the first fluid flow according to the transfer path of the first discharge nozzle 10a

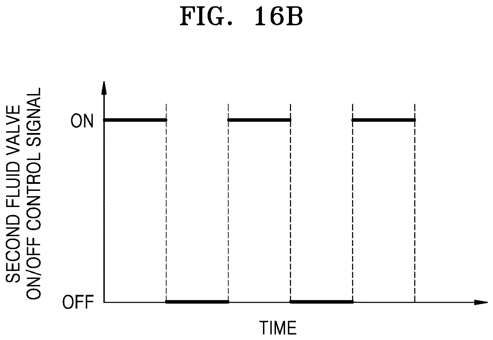

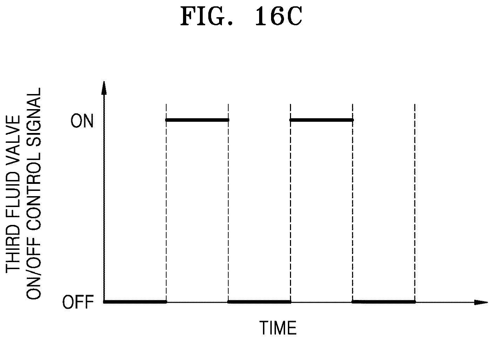

In an embodiment of the present disclosure, to increase the control of the fluid flow of the first material M1 along the transfer path of the first discharge nozzle 10a or a response speed to the control of the fluid flow of the first material M1, the control of the fluid flow of the first material M1 along the transfer path of the first discharge nozzle 10a may be implemented by the control of i) the on/off of the second fluid valve 121 regulating the connection of the second fluid tube 120 connected to the positive pressure source PS and the on/off of the third fluid valve 131 regulating the connection of the third fluid tube 130 connected to the negative pressure source NS. The valve control signal output from the valve controller 150 through the on/off control of the second and third fluid valves 121 and 131 may be simplified into an on control signal and an off control signal which are output towards the second and the third fluid valves 121 and 131. For example, there may not be multiple levels of the control signal set to control the opening degree of the second and third fluid valves 121 and 131, and accordingly, the structure of the second and third fluid valves 121 and 131 and the structure of the valve controller 150 for controlling the second and third fluid valves 121 and 131 may be simplified. As such, to set the pressure difference between the inside and the outside of the heating funnel 10 as a multi-level pressure from the on/off control of the second and third fluid valves 121 and 131, the on/off of the second and third fluid valves 121 and 131 may be alternated and controlled to follow a target pressure (see FIGS. 16B and 16C).

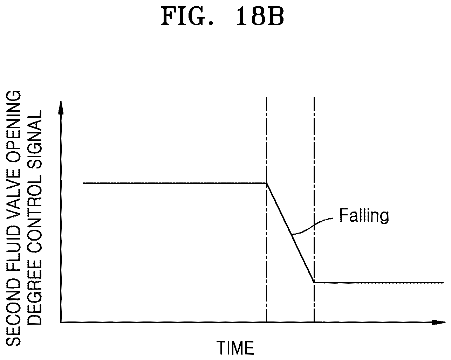

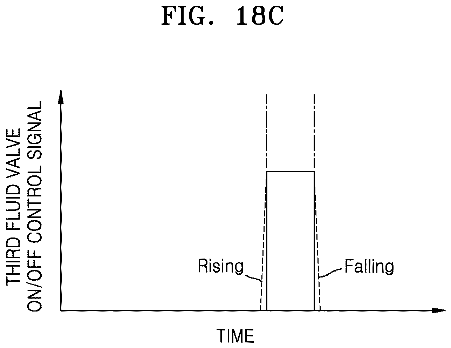

In an embodiment of the present disclosure, the control of the first fluid flow along the transfer path of the first discharge nozzle 10a may be implemented by ii) the control of the on/off of the second fluid valve 121 regulating the connection of the second fluid tube 120 connected to the positive pressure source PS and the opening degree thereof and the control of the on/off of the third fluid valve 131 regulating the connection of the third fluid tube 130 connected to the negative pressure source NS. As such, when the fluid flow of the first material M1 needs to be decelerated due to a decrease in the transfer velocity of the first discharge nozzle 10a or a reduction in the width w of the scan line SL from the transfer path plan, along the transfer path of the first discharge nozzle 10a discharging the first material M1 or along the scan line SL forming the transfer path, to control the fluid flow of the first material M1 by the control of the third fluid valve 131 controlling the opening/closing of the third fluid tube 130 connected to the negative pressure source NS and the second fluid valve 121 controlling the opening/closing and opening degree of the second fluid tube 120 connected to the positive pressure source PS, the valve controller 150 may reduce the opening degree of the second fluid valve 121 regulating the connection of the second fluid tube 120 connected to the positive pressure source PS and simultaneously open-close the third fluid valve 131 regulating the connection of the third fluid tube 130 connected to the negative pressure source NS by a short pulse waveform in an instant. For example, the control signal output from the valve controller 150 towards the second fluid valve 121 may be output in a waveform of a tilted ramp shape having a certain rising time or a certain falling time to reduce the opening degree of the second fluid valve 121, and the control signal output from the valve controller 150 towards the third fluid valve 131 may be output in a waveform of a pulse form having a short rising time and falling time or without a rising time and a falling time as the opening-closing of the third fluid valve 131 is performed at a short time interval (see FIGS. 18B and 18C). For example, in an embodiment of the present disclosure, the valve controller 150 may output a control signal having a waveform of a tilted ramp including a first rising time or a first falling time for a control to reduce the opening degree of the second fluid valve 121 and may output a control signal having a pulse waveform including a second rising time or a second falling time which is shorter than the first rising time or the first falling time for a sequential control of the on/off of the third fluid valve 131 (see FIGS. 18B and 18C).

For example, in an embodiment of the present disclosure, to control the opening degree of the second fluid valve 121 connected to the positive pressure source PS, a control signal that changes continuously, for example, a waveform of ramp shape including a certain rising time may be formed, and accordingly, the opening degree of the second fluid valve 121 may include the certain rising time and an additional time delay. As a result, the time delay may be inevitable for transition from a first opening degree to a second opening degree (sequential change from the first opening degree to the second opening degree) in the control of the opening degree of the second fluid valve 121. However, the transfer velocity may change discontinuously along the transfer path of the first discharge nozzle 10a discharging the first material M1 (for example, a change of transfer velocity between a curved line section and a straight line section), or the width w of the scan line SL may change discontinuously along the transfer path of the first discharge nozzle 10a discharging the first material M1 (for example, according to the shape of the object or the plan for transfer path). In such operation environment where discontinuous change of application volume of the first material M1 is preferred, the second fluid valve 121 on the side of the positive pressure source PS and the third fluid valve 131 on the side of the negative pressure source NS may be controlled simultaneously to induce discontinuous change in the fluid flow of the first material M1 following the discontinuous change of the application volume of the first material M1 from the instant opening-closing control of the third fluid valve 131 connected to the negative pressure source NS along with the opening/closing control of the second fluid valve 121 connected to the positive pressure source PS, i.e., initiation of the opening/closing control of the second fluid valve 121.

As described above, in an embodiment of the present disclosure, in different control methods including i) a control method for controlling the fluid flow of the first material M1 by the on/off control of the second fluid valve 121 on the side of the positive pressure source PS and the on/off control of the third fluid valve 131 on the side of the negative pressure source NS (see FIGS. 16B and 16C) and ii) a control method for controlling the fluid flow of the first material M1 by the on/off control and opening degree control of the second fluid valve 121 on the side of the positive pressure source PS and the on/off control of the third fluid valve 131 on the side of the negative pressure source NS (see FIGS. 18B and 18C), the fluid flow of the first material M1 may be controlled through the on/off of the third fluid valve 131 on the side of the negative pressure source NS along with the on/off control of the second fluid valve 121 on the side of the positive pressure source PS, or the fluid flow of the first material M1 may be controlled through the on/off control and the opening degree control of the second fluid valve 121. In the operational environment where a discontinuous change in the application volume (application volume per unit hour) of the first material M1 is preferred, by inducing the deceleration or the limitation of the fluid flow of the first material M1 at once and following the change of application volume of the first material M1 sequentially or step by step, the transient response characteristics may be improved.

As such, in an embodiment of the present disclosure, the opening/closing of the second fluid valve 121 on the side of the positive pressure source PS may be controlled, or the control of the opening degree of the second fluid valve 121 may be performed along with the control of the opening/closing of the second fluid valve 121. Unlike the different control method concerning the second fluid valve 121 on the side of the positive pressure source PS, the opening/closing of third fluid valve 131 on the side of the negative pressure source NS may be controlled to induce deceleration and limitation to the fluid flow of the first material M1 for causing a deceleration, a limitation, and in particular, a discontinuous change to the fluid flow of the first material M1. Thus, the calculation burden or the calculation resource for implementing the opening degree control in addition to the on/off control of the third fluid valve 131 on the side of the negative pressure source NS may be avoided.

(Transfer of the first and second discharge nozzles 10a and 20a and the stage S)

Throughout the present specification, the transfer of the first and second discharge nozzles 10a and 20a may include absolute transfer of the first and second discharge nozzles 10a and 20a and may encompass relative transfer of the stage S with respect to the first and second discharge nozzles 10a and 20aa. For example, in an embodiment of the present disclosure, through the movement of the stage S on which the first and second materials M1 and M2 discharged from the first and second discharge nozzles 10a and 20a are accumulated, a trail of a trace of the first and second materials M1 and M2 following the transfer path on the stage S planned identical to the transfer of the first and second discharge nozzles 10a and 20a. The trail or the trace of the first and second materials M1 and M2 accumulated on the stage S according to the relative transfer between the first and second discharge nozzles 10a and 20a and the stage S according to the transfer of the stage S or the transfer of the first and second discharge nozzles 10a and 20a may form the outline of the object and the object surrounded by the outline. For example, in an embodiment of the present disclosure, the relative transfer between the stage S and the first and second discharge nozzles 10a and 20a may be performed by the stage S to relatively shorten the power delivery distance with the actuators A, and in the present specification, the movement of the position of the stage S with respect to the first and second discharge nozzles 10a and 20 having fixed positions may be described as the transfer of the first and second discharge nozzles 10a and 20a.

A multi-phase 3D printing apparatus according to an embodiment of the present disclosure includes

the first discharge nozzle 10a for discharging the first material M1 in liquid phase forming an object on the stage S, the heating funnel 10 connected to the first discharge nozzle 10a and filled with the first material M1 in liquid phase, and the two-way pressure control unit 100 connected to the heating funnel 10 and configured to set the pressure difference PIO between the inside and the outside of the heating funnel 10 as a positive pressure or a negative pressure and further include the second discharge nozzle 20a for discharging the second material M2 in a paste phase or a slurry phase forming an outline of the object, wherein the width w of the scan line SL forming the transfer path of the first discharge nozzle 10a may be set to entirely scan an object-forming area in which the object is formed, the object-forming area corresponding to a filler space surrounded by the outline of the object formed from the second material M2.

For example, the multi-phase 3D printing apparatus according to an embodiment of the present disclosure may further include the extrusion apparatus 80 connected to the second discharge nozzle 20a and configured to extrude the second material M2 towards the second discharge nozzle 20a such that the second material M2 in a slurry phase or a paste phase including a mixture of ceramic particles and a matrix to which the ceramic particles are dispersed is discharged.

For example, the multi-phase 3D printing apparatus according to an embodiment of the present disclosure may further include

a heating chamber 50 accommodating the stage S and providing a slow-cooling space 50' of the first and second materials M1 and M2 accumulated on the stage S from the first and second discharge nozzles 10a and 20a, and the pressure difference PIO between the inside and the outside of the heating funnel 10 may correspond to the inside pressure PI of the heating funnel 10 in which the first material M1 in liquid phase is accommodated based on the atmospheric pressure of the slow-cooling space 50' of the heating chamber 50.

Hereinafter, an aspect of the multi-phase 3D printing apparatus according to an embodiment of the present disclosure is further described in detail.

A multi-phase 3D printing apparatus according to an embodiment of the present disclosure includes:

the stage S providing a support base for a target object;
the first and second discharge nozzles 10a and 20a arranged on the stage S and respectively discharging the second material M2 in a paste phase or a slurry phase forming an outline of an object and the first material M1 in liquid phase filling up a filler space surrounded by the outline of the object formed from the second material M2;
the extrusion apparatus 80 connected to the second discharge nozzle 20a and extruding the second material M2 towards the second discharge nozzle 20a to discharge the second material M2 in a slurry phase or a paste phase including ceramic particles and a matrix into which the ceramic particles are dispersed;
the heating funnel 10 connected to the first discharge nozzle 10a and melting a metal block as an input such that a metal fluid of the first material M1 in liquid phase melted from the metal block is discharged from the first discharge nozzle 10a; and
the heating chamber 50 accommodating the stage S and providing the slow-cooling space 50' of the first and second materials M1 and M2 accumulated on the stage S from the first and second discharge nozzles 10a and 20a.

With respect to the first material M1, a metal block in solid phase may be input into the heating funnel 10 heating the input metal block above a melting point and then may be formed into a liquid metal or a metal fluid of the first material M1. The metal or the metal fluid melted inside the heating funnel 10 may be discharged onto the stage S through the first discharge nozzle 10a forming the bottom portion of the heating funnel 10.

With respect to the second material M2, the second material M2 may be formed by a composite material in a paste phase or a slurry phase including a mixture of ceramic particles and a vehicle and/or a binder in liquid or gel phase. For example, the ceramic particles may have a diameter of several micrometers. Such second material M2 formed in a paste phase or a slurry phase in which ceramic particles are dispersed may have a less fluidity than the first material M1 formed from a liquid metal or a metal fluid, and the second material M2 may be forcibly transferred through the second discharge nozzle 20a or a connection body 70 connected to the second discharge nozzle 20a by using extrusion to form a uniform mixture (or dispersion at a uniform concentration) between ceramic particles (solid phase) and a matrix accommodating the ceramic particles (liquid phase or gel phase) which have different phases from each other.

For example, the extrusion apparatus 80 extruding the first material M1 may include a first hopper 81 into which the ceramic particles forming a solid component of the first material M1 are input and a second hopper 82 into which the matrix forming a paste phase or a slurry phase by accommodating the ceramic particles is input. The ceramic particles and the matrix input into the first and second hoppers 81 and 82 may be input together into a transfer tube 83 of the extrusion apparatus 80, mixed with each other by a rotating screw 85 formed inside the transfer tube 83, and then transferred in a supply direction towards the stage S. For example, the mixture may be discharged onto the stage S through the first discharge nozzle 10a at the bottom of a discharge unit 20 along the discharge unit 20 buried in a buried block 40 described below via the connection body 70 facilitating the transfer of the first material M1 between a discharge hole 80a of the extrusion apparatus 80 and the first discharge nozzle 10a formed on the stage S or the discharge unit 20 including the first discharge nozzle 10a. For example, in an embodiment of the present disclosure, the discharge hole 80a of the extrusion apparatus 80 may be connected to an upper end portion of the connection body 70, and the discharge unit 20 including the first discharge nozzle 10a may be connected to a lower end portion of the connection body 70.

The heating funnel 10 and the discharge unit 20 may be buried together inside the buried block 40, and the buried block 40 may define a distance between the first discharge nozzle 10a forming the lower portion of the heating funnel 10 and the second discharge nozzle 20a forming the lower portion of the discharge unit 20 by burying and fixing the heating funnel 10 and the discharge unit 20 together. In an embodiment of the present disclosure, the buried block 40 may insulate the inside of the heating funnel 10 from the surrounding environment such that the temperature of the inside of the heating funnel 10 surrounding a first heat source 15 winded on the external circumferential surface of the heating funnel 10 and controlled by the first heat source 15 is maintained above the melting point of the metal block. By arranging the first heat source 15 therebetween, the temperature of the discharge unit 20 arranged opposite to the heating funnel 10 may be maintained at a temperature higher than the temperature of the surrounding environment or the room temperature yet lower than the melting point of the metal block. In an embodiment of the present disclosure, the buried block 40 may include an insulating material.

In an embodiment of the present disclosure, the buried block 40 may bury most parts of the heating funnel 10 and the discharge unit 20 and expose the inlet forming the upper portion of the heating funnel 10 and a fitting end 20b forming the upper portion of the discharge unit 20. As the upper portion of the heating funnel 10 for input of the metal block and the upper portion of the discharge unit 20 for connection with the connection body 70 are included, the upper portion of the heating funnel 10 and the discharge unit 20 may be exposed to leave a certain margin. In an embodiment of the present disclosure, on the buried block 40, in addition to the inlet forming the upper portion of the heating funnel 10 and the fitting end 20b forming the upper portion of the discharge unit 20, an electric contact point 15a of the first heat source 15 surrounding the outer circumferential surface of the heating funnel 10 may be exposed. The electric contact point 15a of the first heat source 15 may extrude to the highest level to block electric interference with other peripheral components. For example, the electric contact point 15a may extrude to a level higher than the inlet of the heating funnel 10 and the fitting end 20b of the discharge unit 20.

The buried block 40 may include an upper block 41 formed to have a relatively high height to bury most parts of the heating funnel 10 and the discharge unit 20 and a lower block 42 formed to have an extended surface from the upper block 41. The slow-cooling space 50' including an upper portion closed by the lower block 42, a side portion closed by a side wall 50a of the heating chamber 50, and a lower portion closed by a bottom wall 50b of the heating chamber 50 may be formed. For example, in an embodiment of the present disclosure, the slow-cooling space 50' may be formed from assembly of the heating chamber 50 and the buried block 40, and a second heat source 55 may be formed on the side wall 50a of the heating chamber 50 forming the slow-cooling space 50'. The heating chamber 50 may provide the slow-cooling space 50' which accommodates the stage S and is for the first and second materials M1 and M2 accumulated on the stage S from the first and second discharge nozzles 10a and 20a. For example, in an embodiment of the present disclosure, the pressure difference between the inside and the outside of the heating funnel 10 may correspond to the inside pressure of the heating funnel 10 in which the first material M1 is accommodated, based on the pressure of the slow-cooling space 50' of the heating chamber 50 (for example, atmospheric pressure of 1 atm).

On the bottom wall 50b of the heating chamber 50, an opening 50" for power connection between actuators A (first to third actuators) and the stage S may be formed, and a connecting rod 200 for power-connection between the stage S the actuators A providing driving power to the stage S may pass through the opening 50" and power-connect the actuators A with the stage S. In an embodiment of the present disclosure, the buried block 40, the heating chamber 50, and the actuators A may be aligned through an assembly guide rod R.

Throughout the present specification, when the pressure difference between the inside and the outside of the heating funnel 10 is set as a negative pressure, the application and cut-off of the negative pressure as the pressure difference between the inside and the outside of the heating funnel 10 is conducted for relatively short duration, and the negative pressure in a form of step or pulse may be provided for relatively short duration to block the inertia of the fluid flow of the first material M1 from the heating funnel 10 towards the stage S. For example, in the present specification, when the pressure difference between the inside and the outside of the heating funnel 10 is set as a negative pressure, this may not mean that the negative pressure is not removed and is maintained or that the negative pressure is maintained for a substantial duration.

In an embodiment of the present disclosure, before the first discharge nozzle 10a is operated, i.e., before the first material M1 is discharged from the first discharge nozzle 10a, a path plan for the first discharge nozzle 10a may be generated. For example, the path plan for the first discharge nozzle 10a may set every configuration relating to the discharge of the first material M1, including the transfer path of the first discharge nozzle 10a, the transfer velocity and discharge velocity at each point on the transfer path, etc. In an embodiment of the present disclosure, the discharge of the first material M1 from the first discharge nozzle 10a may not necessarily accompany transfer of the first discharge nozzle 10a, i.e., relative transfer between the first discharge nozzle 10a and the stage S. When the first discharge nozzle 10a is in a stationary state, i.e., when the relative positions between the first discharge nozzle 10a and the stage S are fixed, according to the fluidity of the first material M1, the first material M1 discharged from the first discharge nozzle 10a may fill up the filler space in the outline formed of the second material M2 based on the relatively high fluidity. In this embodiment, by setting the pressure difference between the inside and the outside of the heating funnel 10 as a negative pressure, the inertia of the fluid flow of the first material M1 from the inside of the heating funnel 10 towards the stage S may be blocked, and the discharge of the first material M1 may be discontinued.

In an embodiment of the present disclosure, prior to the discharge of the first material M1, the transfer path and the transfer velocity of the first discharge nozzle 10a may be set from the path plan for the first discharge nozzle 10a discharging the first material M1, and in this regard, the transfer path of the first discharge nozzle 10a may be set such that the filler space within the outline of the object formed of the second material M2 is filled. For example, in an embodiment of the present disclosure, the transfer path of the first discharge nozzle 10a may be set such that the scan lines SL forming the transfer path do not overlap each other, or the scan lines SL forming the transfer path of the first discharge nozzle 10a partially overlap each other. In various embodiments of the present disclosure, the transfer path of the first discharge nozzle 10a may be formed by the scan lines SL that entirely fill the outline of the object formed of the second material M2 and overlap each other or the scan lines SL which do not overlap each other.

In an embodiment of the present disclosure, the first and second discharge nozzles 10a and 10b for discharge of the first and second materials M1 and M2 may implement integrated transfer through a combined structure structurally combining the first and second discharge nozzles 10a and 10b (for example, structurally combined and buried in the buried block 40). For example, when the first and second discharge nozzles 10a and 10b are transferred along the transfer path of the first discharge nozzle 10a, the first material M1 may be discharged from the first discharge nozzle 10a, or when the first and second discharge nozzles 10a and 10b are transferred along the transfer path of the second discharge nozzle 10b, the second material M2 may be discharged from the second discharge nozzle 10b. In an embodiment of the present disclosure, when the first and second discharge nozzles 10a and 10b are transferred by a certain interval, the first and second materials M1 and M2 may be discharged simultaneously, and as the first material M1 is accumulated in the inner area of the outline of the object formed from the second material M2, the object may be formed. For example, the outline and the object may be formed simultaneously from the integrated transfer of the first and second discharge nozzles 10a and 10b. For example, as the discharge of the first material M1 in which the first and second discharge nozzles 10a and 10b for discharge of the first and second materials M1 and M2 follow the transfer path of the first discharge nozzle 10a and the discharge of the second material M2 in which the first and second discharge nozzles follow the transfer path of the second discharge nozzle 10b are performed in time-sequentially different time slots, the pressure difference between the inside and the outside of the heating funnel 10 in which the first material M1 is filled may be set as a negative pressure to block a leakage of the first material M1 during the discharge of the second material M2, and setting the pressure as a negative pressure to block the leakage of the first material M1 during the discharge of the second material M2 may be performed in various driving environments.

In an embodiment of the present disclosure, for the purpose of controlling the fluid flow of the first material M1 from the heating funnel 10 towards the stage S, the on/off control of the second fluid valve 121 connected to the positive pressure source PS and the on/off control of the third fluid valve 131 connected to the negative pressure source NS may be alternated. For example, the on/off of the second and third fluid valves 121 and 131 may be controlled to partially overlap each other along the time axis in consideration of a time delay (latency) between an input, i.e., the inertia of the fluid flow in the second fluid tube 120 connected to the second fluid valve 121 and the third fluid tube 130 connected to the third fluid valve 131 and the turn-on/turn-off of the second and third fluid valves 121 and 131 and the output, i.e., the pressure difference between the inside and the outside of the heating funnel 10. As any one control is initiated at a previous time step in consideration of the inertia of the fluid flow or the time delay, the on/off of the second and third fluid valves 121 and 131 may be controlled to partially overlap each other along the time axis. In various embodiments of the present disclosure, the on/off of the second and third fluid valves 121 and 131 may be performed in an exclusive manner not allowing an overlap along the time axis.

In an embodiment of the present disclosure, the two-way pressure control unit 100 (more specifically, the valve controller 150) may control the on/off and the opening degree o the second fluid valve 121 connected to the positive pressure source PS and may control the on/off of the third fluid valve 131 connected to the negative pressure source NS. In an embodiment of the present disclosure, the opening degree of the third fluid valve 131 may be controlled along with the on/off of the third fluid valve 131 connected to the negative pressure source NS. For example, for prior setting of the pressure as a negative pressure along the time axis, according to length of the ON section of the third fluid valve 131 connected to the negative pressure source NS, e.g., when the ON section of the third fluid valve 131 is set relatively long, the opening degree of the third fluid valve 131 may be controlled such that the third fluid valve 131 is open by a relatively width at the current time step. When the ON section of the third fluid valve 131 is set relatively short previously, the opening degree of the third fluid valve 131 may be controlled such that the third fluid valve 131 is open by a relatively wide with at the current time step. For example, in an embodiment of the present disclosure, when the ON section of the third fluid valve 131 is set relatively long previously, the inside pressure of the heating funnel 10 may be a relatively high negative pressure. Accordingly, considering the driven load of the negative pressure source NS according to the suction from heating funnel 10 in a high negative pressure, the opening degree of the third fluid valve 131 may be controlled such that the third fluid valve 131 is open by a narrow width. When the ON section of the third fluid valve 131 is set relatively short previously, the inside pressure of the heating funnel 10 may be a relatively low negative pressure. Accordingly, without any need of considering the driven load of the negative pressure source NS according to the suction from the heating funnel 10 in a low negative pressure, the opening degree of the third fluid valve 131 may be controlled such that the third fluid valve 131 is open by a wide width.

Referring to FIG. 15, the application volume per unit hour set according to the transfer path and the transfer velocity of the first discharge nozzle 10a may be calculated by multiplying the cross-sectional area of the scan line SL including the height h dimension and the width w dimension of the scan line SL forming the transfer path of the first discharge nozzle 10a and the length L of the scan line SL per unit hour corresponding to the transfer velocity.

Although the present disclosure is described referring to the drawings, such descriptions are merely an example, and a person skilled in the art may understand that various modifications and equivalent embodiments can be made from the provided description.

**Industrial Applicability**

The present disclosure may be applied to a three-dimensional (3D) printing apparatus and an industrial field related thereto.

**Claims**

1.   A multi-phase three-dimensional (3D) printing apparatus comprising:

a first discharge nozzle for discharging a first material in liquid phase to form a shaped object on a stage;
a heating funnel connected to the first discharge nozzle and filled up with the first material in liquid phase;
a two-way pressure control unit connected to the heating funnel, alternately reversing, between a positive pressure and a negative pressure, a pressure difference between an inside and an outside of the heating funnel, and configured to i) in response to a positive pressure, accelerate a flow of the first material from the heating funnel towards the first discharge nozzle and ii) in response to a negative pressure, decelerate the flow of the first material from the heating funnel towards the first discharge nozzle or apply a brake to the flow of the first material.

2.   The multi-phase 3D printing apparatus of claim 1, wherein
the two-way pressure control unit sets the pressure difference between the inside and the outside of the heating funnel as a negative pressure and applies a brake to the flow of the first material from the heating funnel towards the first discharge nozzle.

3.   The multi-phase 3D printing apparatus of claim 1, wherein
the two-way pressure control unit sets the pressure difference between the inside and the outside of the heating funnel as a negative pressure or as a pulse of a negative pressure including application and cut-off of a negative pressure, to provide a suction force towards the heating funnel such that the flow of the first material is not discharged from the heating funnel towards the first discharge nozzle.

4.   The multi-phase 3D printing apparatus of claim 1, wherein

the two-way pressure control unit
sets the pressure difference between the inside and the outside of the heating funnel as a negative pressure or as a pulse of a negative pressure including application and cut-off of a negative pressure, at a finish point of a transfer path of the first discharge nozzle or a finish point of a scan line forming the transfer path of the first discharge nozzle.

5.   The multi-phase 3D printing apparatus of claim 1, wherein

the two-way pressure control unit
sets the pressure difference between the inside and the outside of the heating funnel as a negative pressure or as a pulse of a negative pressure including application and cut-off of a negative pressure, in a section between a finish point of a scan line and a start point of the scan line, along a transfer path of the first discharge nozzle or a scan line forming the transfer path of the first discharge nozzle.

6.   The multi-phase 3D printing apparatus of claim 1, wherein,

when forming the shaped object according to accumulation of a previous turn and a subsequent turn and lamination of a previous layer and a subsequent layer,
along a transfer path of the first discharge nozzle, a finish point and a start point of a scan line forming the transfer path of the first discharge nozzle are positioned between the previous turn and the subsequent turn and between the previous layer and the subsequent layer.

7.   The multi-phase 3D printing apparatus of claim 6, wherein,

along the transfer path of the first discharge nozzle,
an application stop section is formed between a finish point of the scan line in the previous turn and a start point of the scan line in the subsequent turn and
between a finish point of the scan line in the previous layer and a start point of the scan line in the subsequent layer, and
in the application stop section, the two-way pressure control unit sets the pressure difference between the inside and the outside of the heating funnel as a negative pressure or as a pulse of a negative pressure including application and cut-off of a negative pressure.

8.   The multi-phase 3D printing apparatus of claim 1, further comprising

a second discharge nozzle for discharging a second material to form an outline of the shaped object,

wherein, to shut off discharge of the first material when the second material is being discharged, the two-way pressure control unit sets the pressure difference between the inside and the outside of the heating funnel as a negative pressure or as a pulse of a negative pressure including application and cut-off of a negative pressure.

9. The multi-phase 3D printing apparatus of claim 8, wherein

an operation section of the first discharge nozzle in which the first discharge nozzle and the second discharge nozzle combined with each other are transferred together along a transfer path of the first discharge nozzle and an operation section of the second discharge nozzle in which the first discharge nozzle and the second discharge nozzle combined with each other are transferred together along a transfer path of the second discharge nozzle are distinguished from each other by respective exclusive time slots in a shaping process for forming a shaped object.

10. The multi-phase 3D printing apparatus of claim 1, wherein the two-way pressure control unit comprises:

a first fluid tube connected to the heating funnel, and a first fluid valve for regulating connection of the first fluid tube; a second fluid tube connected to a positive pressure source, and a second fluid valve for regulating connection of the second fluid tube; a third fluid tube connected to a negative pressure source, and a third fluid valve for regulating connection of the third fluid tube; and a valve controller for controlling the first to third fluid valves, and the valve controller implements on/off control of the second fluid valve and on/off control of the third fluid valve.

11. The multi-phase 3D printing apparatus of claim 10, wherein

the valve controller alternately controls on/off of the second fluid valve and on/off of the third fluid valve in a staggered manner, such that, according to a time axis, the on/off states are partially overlapped or are alternated in a mutually exclusive manner without overlap.

12. The multi-phase 3D printing apparatus of claim 10, wherein the valve controller implements control of on/off and an opening degree of the second fluid valve and control of on/off and an opening degree of the third fluid valve.

13. The multi-phase 3D printing apparatus of claim 12, wherein

the valve controller implements, along with control for reducing the opening degree of the second fluid valve, sequential control of on/off of the third fluid valve.

14. The multi-phase 3D printing apparatus of claim 13, wherein

the valve controller outputs a control signal having a sloped ramp waveform which has a first rising time or a first falling time, to control a reduction in the opening degree of the second fluid valve, and outputs a control signal having a pulse wave form which has a second rising time shorter than the first rising time or a second falling time shorter than the second falling time, to sequentially control on/off of the third fluid valve.

15. The multi-phase 3D printing apparatus of claim 1, wherein

the two-way pressure control unit accelerates the flow of the first material from the heating funnel towards the first discharge nozzle by setting the pressure difference between the inside and the outside of the heating funnel as a positive pressure, in response to a shortage of an application volume per unit hour of the first material, wherein the application volume per unit hour is set according to a transfer path and a transfer velocity of the first discharge nozzle, or reduces or applies a brake to the flow of the first material from the heating funnel towards the first discharge nozzle by setting the pressure difference between the inside and the outside of the heating funnel as a negative pressure, in response to an excess of an application volume per unit hour of the second material, wherein the application volume per unit hour is set according to the transfer path and the transfer velocity of the first discharge nozzle.

16. The multi-phase 3D printing apparatus of claim 15, wherein

the flow of the first material from the heating funnel towards the first discharge nozzle is accelerated or reduced by setting the pressure difference between the inside and the outside of the heating funnel as a positive pressure or a negative pressure, according to an application volume per unit hour of the first material, wherein the application volume per unit hour is set according to the transfer path and the transfer velocity of the first discharge nozzle, and

the application volume per unit hour of the first material is calculated by multiplying a length of a scan line per unit hour, corresponding to the transfer velocity, by either a width of the scan line forming the transfer path or a cross-sectional area including a width dimension and a height dimension of the scan line.

17. The multi-phase 3D printing apparatus of claim 1, wherein

the heating funnel includes a circumferential surface having a top-wide, bottom-narrow shape in which an internal diameter gradually decreases from a top inlet, through which a metal block of the first material is introduced, towards a bottleneck portion connected to the first discharge nozzle which is located at a lower end and discharges the first material in liquid phase, and

with respect to the flow of the first material in liquid phase, fluid friction applied from the circumferential surface of the heating funnel and the bottleneck portion that limits a flow rate of the first material cause a pressure loss in the flow of the first material.

18. The multi-phase 3D printing apparatus of claim 17, wherein

as the first material, which is filled in the heating funnel up to a limited capacity, is discharged from the inside of the heating funnel onto the stage outside the heating funnel, the pressure loss caused in the flow of the first material proceeding from the inside of the heating funnel to the outside of the heating funnel is reduced.

19. The multi-phase 3D printing apparatus of claim 18, wherein

the two-way pressure control unit controls the pressure difference between the inside and the outside of the heating funnel,

in a steady-state where an amount of the first material discharged from the inside of the heating funnel onto the stage outside the heating funnel remains constant,

i) to reduce the pressure difference between the inside and the outside of the heating funnel to offset a pressure loss which decreases as the first material is discharged, or

ii) to maintain a constant pressure difference between the inside and the outside of the heating funnel, as a reduction in weight of the first material and a reduction in pressure loss, which act in opposite directions with respect to the flow of the first material, are offset against each other, in accordance with a discharge of the first material.

20. The multi-phase 3D printing apparatus of claim 1, further comprising:

a sealing cover covering and sealing a top inlet of the heating funnel, and coupled to face the heating funnel; and

a sealing gasket arranged between the heating funnel and the sealing cover and sealing a gap between the heating funnel and the sealing cover.

21. The multi-phase 3D printing apparatus of claim 20, wherein

the heating funnel comprises a sealing flange formed along an outer circumferential edge of the top inlet, and

the sealing gasket is provided between the sealing cover and the sealing flange of the heating funnel, which are coupled in a facing manner by means of a fastening member passing through the sealing cover having a plate shape and the sealing flange of the heating funnel, which are formed parallel to each other.

22. The multi-phase 3D printing apparatus of claim 1, wherein

the two-way pressure control unit comprises:

a first fluid tube extending towards the heating funnel from a common joining point;

a second fluid tube connected to a positive pressure source from the common joining point; and

a third fluid tube connected to a negative pressure source from the common joining point.

23. The multi-phase 3D printing apparatus of claim 22, wherein

the two-way pressure control unit further comprises:

a first fluid valve arranged on the first fluid tube and connected between the common joining point and the heating funnel;

a first pressure gauge arranged on the first fluid tube and connected between the heating funnel and the first fluid valve;
a second fluid valve arranged on the second fluid tube and connected between the common joining point and the positive pressure source;
a second pressure gauge arranged on the second fluid tube and connected between the positive pressure source and the second fluid valve;
a third fluid valve arranged on the third fluid tube and connected between the common joining point and the negative pressure source; and
a third pressure gauge arranged on the third fluid tube and connected between the negative pressure source and the third fluid valve.

24. The multi-phase 3D printing apparatus of claim 23, wherein

the two-way pressure control unit further comprises
a valve controller connected to each of the first to third fluid valves and configured to apply a control signal for controlling opening/closing and an opening degree of each of the first to third fluid values.

25. The multi-phase 3D printing apparatus of claim 24, wherein

the valve controller
controls and opens the first and second fluid valves to set the pressure difference between the inside and the outside of the heating funnel as a positive pressure, and
controls and opens the first and third fluid valves to set the pressure difference between the inside and the outside of the heating funnel as a negative pressure.

26. The multi-phase 3D printing apparatus of claim 1, further comprising

a second discharge nozzle for discharging the second material in paste or slurry form for forming an outline of the shaped object,
wherein a width of a scan line forming a transfer path of the first discharge nozzle is set to entirely scan a shaping area in which the shaped object is formed, the shaping area corresponding to a filler space surrounded by the outline of the shaped object formed from the second material.

27. The multi-phase 3D printing apparatus of claim 26, further comprising
an extrusion apparatus which is connected to the second discharge nozzle and extrudes the second material towards the second discharge nozzle to discharge the second material in a slurry or paste form including ceramic particles and a matrix in which the ceramic particles are dispersed.

28. The multi-phase 3D printing apparatus of claim 26, further comprising

a heating chamber accommodating the stage and providing a slow-cooling space for the first and second materials accumulated on the stage from the first and second discharge nozzles,
wherein the pressure difference between the inside and the outside of the heating funnel corresponds to an inside pressure of the heating funnel in which the first material in liquid phase is accommodated, based on an atmospheric pressure of the slow-cooling space of the heating chamber.

# FIG. 1

# FIG. 2

100

TWO-WAY PRESSURE
CONTROL UNIT

CV

III

15a

10

20b

15

20

10a

20a

55

R

50

S

50'

Z1
Z3
Z2

# FIG. 3

100

TWO-WAY PRESSURE
CONTROL UNIT

CV

10

20b

15

20

41

40

42

20a

R

10a

55

50a

50

S

50

50b

Z1
Z2
Z3

50'

200

50''''

# FIG. 4

TWO-WAY PRESSURE
CONTROL UNIT

100

CV

15a

10

15

20b

40 { 41
42

20

20a

R

10a

55

M1

M2

S

50a } 50
50b

Z1
Z3
Z2

50'

200

# FIG. 5

# FIG. 6

TWO-WAY PRESSURE
CONTROL UNIT

100

CV

GA

10f

10

41 40

42

R

50a

50b

50

Z1

Z3

Z2

# FIG. 7

100

TWO-WAY PRESSURE
CONTROL UNIT

CV

GA

10f

GAS

10

15

Fr

Z1
Z2
Z3

BN

10a

# FIG. 8

# FIG. 9

FIG. 10A

FIG. 10B

# FIG. 10C

FIG. 10D

INJECTED GAS
VOLUME FLOW RATE

TIME

# FIG. 11

FIG. 12

# FIG. 13

# FIG. 14

## FIG. 15

FIG. 16A

# FIG. 16B

FIG. 16C

# FIG. 17

M2

M1(SL)

FP

SP

FP

SP

FP

SP

SP

ST

FIG. 18A

FIG. 18B

# FIG. 18C

# FIG. 19

**EP 4 696 436 A1**

## INTERNATIONAL SEARCH REPORT

| | International application No. |
|---|---|
| | **PCT/KR2024/015631** |

| A. | CLASSIFICATION OF SUBJECT MATTER |
|---|---|

**B22F 12/50**(2021.01)i; **B22F 12/13**(2021.01)i; **B22F 12/17**(2021.01)i; **B22F 10/30**(2021.01)i; **B22F 10/22**(2021.01)i

According to International Patent Classification (IPC) or to both national classification and IPC

| B. | FIELDS SEARCHED |
|---|---|

Minimum documentation searched (classification system followed by classification symbols)

B22F 12/50(2021.01); B22F 10/22(2021.01); B22F 10/368(2021.01); B22F 12/00(2021.01); B22F 12/30(2021.01); B28B 1/30(2006.01); B29C 35/08(2006.01); B29C 41/02(2006.01); C08G 73/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 3D 프린팅(3D printing), 가열 퍼널(heating funnel), 압력 제어유닛(pressure control unit), 노즐(nozzle), 음압(negative pressure), 양압(positive pressure)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022-0410268 A1 (PERRONE, Michael A.) 29 December 2022 (2022-12-29) See paragraphs [0027]-[0040] and figure 1. | 1-5,15-19 |
| Y | | 6-14,20-28 |
| Y | CN 114131051 B (WUHAN POLYTECHNIC UNIVERSITY) 22 September 2023 (2023-09-22) See paragraphs [0095]-[0103], claim 1 and figures 1 and 3. | 6,7,20,21 |
| Y | WO 2020-096951 A1 (TENG, Yi-Hsien Harry) 14 May 2020 (2020-05-14) See paragraphs [0037], [0045] and [0046] and figure 2. | 8,9,26,27,28 |
| Y | US 5633021 A (BROWN et al.) 27 May 1997 (1997-05-27) See column 14, line 52 – column 15, line 36 and figure 16. | 10-14,22-25 |
| Y | JP 2018-519186 A (SABIC GLOBAL TECHNOLOGIES B.V.) 19 July 2018 (2018-07-19) See paragraph [0018] and figure 1. | 28 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2025** | **14 March 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015631**

| Patent document cited in search report | | | Publication date (day/month/year) | Patent family member(s) | | | Publication date (day/month/year) |
|---|---|---|---|---|---|---|---|
| US | 2022-0410268 | A1 | 29 December 2022 | US | 12179267 | B2 | 31 December 2024 |
| CN | 114131051 | B | 22 September 2023 | CN | 114131051 | A | 04 March 2022 |
| WO | 2020-096951 | A1 | 14 May 2020 | None | | | |
| US | 5633021 | A | 27 May 1997 | AU | 3949695 | A | 15 May 1996 |
| | | | | WO | 96-12608 | A3 | 07 July 1996 |
| JP | 2018-519186 | A | 19 July 2018 | CN | 107848197 | A | 27 March 2018 |
| | | | | EP | 3302938 | A1 | 11 April 2018 |
| | | | | JP | 6628814 | B2 | 15 January 2020 |
| | | | | KR | 10-2018-0014160 | A | 07 February 2018 |
| | | | | US | 2018-0147773 | A1 | 31 May 2018 |
| | | | | WO | 2016-193933 | A1 | 08 December 2016 |

Form PCT/ISA/210 (patent family annex) (July 2022)